# EUROPÄISCHE PATENTSCHRIFT

(11) **EP 3 743 701 B1**
(45) Veröffentlichungstag und Bekanntmachung des Hinweises auf die Patenterteilung: **25.11.2026**
(21) Anmeldenummer: 19705905.8
(22) Anmeldetag: 24.01.2019
(51) Int. Cl.: G01L 5/167, G01L 3/10, G01L 3/14, G01L 5/00, G01L 1/16

(54) **MESSSYSTEM UND VERFAHREN ZUR BESTIMMUNG EINER KRAFT UND/ODER EINES DREHMOMENTS AN EINER DREHMOMENTÜBERTRAGENDEN WELLE**
SENSOR SYSTEM AND METHOD FOR DETERMINING FORCE OR TORQUE ON A TORQUE-TRANSMITTING SHAFT
SYSTÈME DE CAPTEUR ET PROCÉDÉ POUR DETERMINER UN EFFORT OU UN COUPLE SUR UN ARBRE TRANSMETTANT UN C0UPLE

(30) Priorität: 24.01.2018 AT 500642018
(43) Veröffentlichungstag der Anmeldung: 02.12.2020
(73) Patentinhaber: Piezocryst Advanced Sensorics GmbH, 8020 Graz (AT)
(72) Erfinder: SCHRICKER, Alexander, 8046 Graz (AT); DREISIEBNER, Franz, 8010 Graz (AT); KOKAL, Helmut, 8020 Graz (AT); PROPST, Mario, 8742 Obdach (AT); HIRSCHLER, Michael, 8020 Graz (AT)
(74) Vertreter: Hahner, Ralph
(86) Internationale Anmeldenummer: PCT/AT2019/060027
(87) Internationale Veröffentlichungsnummer: WO 2019/144171

(56) Entgegenhaltungen:
- EP-A1- 0 459 069
- CN-A- 103 196 594

## Beschreibung

Die Erfindung betrifft ein Messsystem zur Bestimmung einer Kraft und/oder eines Drehmoments an einer drehmomentübertragenden Welle, wobei das Messsystem wenigstens drei, insbesondere wenigstens vier, Piezoelemente mit jeweils einer Vorzugsrichtung aufweist, welche jeweils an unterschiedlichen Positionen um eine Drehachse der Welle in einem Kraftfluss, welcher über die Welle übertragen wird, in der Weise angeordnet sind, dass eine Kraft des Kraftflusses, insbesondere ausschließlich, an den Piezoelementen anliegt.

Bei der Entwicklung und Regelung von Motoren, insbesondere Brennkraftmaschinen oder Elektromaschinen, ist eine möglichst genaue Kenntnis des Drehmoments an der Welle des Motors wichtig, insbesondere im Prüfstandsbetrieb.

Aus dem Stand der Technik ist bekannt, hierfür Messsysteme mit Dehnungsmessstreifen oder auch Piezosensoren einzusetzen.

Dehnungsmessstreifen und ähnliche Messelemente dienen im Allgemeinen dazu, statische Kräfte zu messen. Im Allgemeinen haben Messsysteme mit einer solchen Art von Messelementen jedoch eine zu lange Reaktionszeit, um dynamische Kraftverläufe zu messen. Piezoelektrische Messelemente bzw. Piezoelemente eignen sich dagegen zur Messung dynamischer Zug-, Druck- und Scherkräfte. Diese haben einen breiten Dynamikbereich, sind steif und können auch hochdynamische Kräfte bei gleichzeitig hoher Auflösung messen.

Das Dokument EP 0 266 452 A1 betrifft ein piezoelektrisches Aufnehmerelement für Kraft- und Drehmomentmessungen, welches aus mindestens zwei Piezoelementen sowie mindestens einer dazwischen angeordneten Trägerplatte aus isolierendem Material besteht, wobei die Piezoelemente in Bezug auf das Koordinatensystem der Trägerplatte kristallographisch vororientiert und mit dieser fest verbunden sind.

Das Dokument DE 195 25 22 A1 betrifft eine Kraft- und Momentenmessanordnung, bestehend aus mehreren Kraftmesszellen und Verstärkeranordnungen, dadurch gekennzeichnet, dass mehrere Kraftmesszellen zu einer Messeinheit so zwischen Montageplatten fest verschraubt sind und bezüglich Koordinatenachsen so angeordnet sind, dass Momentenbildung möglich ist, wozu die Signale der Kraftmesszellen zwecks Auswertung zu einer Gruppe von Verstärkern und deren Ausgänge wiederum zu einer Gruppe von Operationsverstärkern geleitet wird, wodurch sowohl die einzelnen Kraftkomponenten als auch die Kraftmomente messbar sind.

Das Dokument DE 10 2009 014284 B4 betrifft einen Drehmomentsensor, der aus einem ersten und einem zweiten scheibenförmigen Befestigungsflansch besteht, die sich parallel axial gegenüberliegen und durch ein radial innen liegendes Momentübertragungselement starr miteinander verbunden sind, wobei der zweite Befestigungsflansch als Messflansch ausgebildet ist, der auf einem koaxial umlaufenden Bereich zwischen seinem radial äußeren Befestigungsbereich und dem koaxial innen liegenden Momentübertragungselement mehrere durch radiale Versteifungsstege miteinander getrennte Ausnehmungen und Scherkraftaufnehmer aufweist, wobei die Ausnehmungen durch mindestens drei einseitig axial nach außen offene Messtaschen gebildet sind, wobei die Grundfläche der Messtaschen als eine ebene geschlossene Fläche ausgebildet ist, die einen gleichbleibend dünnen, federelastischen Verformungskörper darstellt, und dass auf den Grundflächen oder den axial gegenüberliegenden Außenflächen der Messtaschen die Scherkraftaufnehmer appliziert sind.

Das Dokument EP 0 459 069 offenbart einen Zwischenlage-Sensor mit kraftmässig parallelgeschalteten scheibenförmigen Messelementen (6,7), die auf Druck- oder Schubkräfte empfindlich sind zum Einbau zwischen kraftübertragenden Maschinenteilen, wobei die Messelemente (6,7) unter mechanischer Vorspannung einzeln eingeschweisst sind, wodurch die Spaltfederung vermindert wird, und dass die Messelemente (6,7) gemeinsam mit Ladungsverstärkern (8) und weiteren Elektronik-Einheiten eine Montageeinheit bilden.

Es ist eine Aufgabe der Erfindung, eine verbesserte Bestimmung eines an einer drehmomentübertragenden Welle anliegenden Drehmoments oder einer anliegenden Kraft zu ermöglichen. Insbesondere ist es eine Aufgabe der Erfindung, ein Messsystem bereitzustellen, welches einfach zu kalibrieren ist.

Diese Aufgabe wird gelöst durch eine Messsystem zur Bestimmung einer Kraft und/oder eines Drehmoments, ein Verfahren zur Bestimmung eines an einer drehmomentübertragenden Welle anliegenden Drehmoments und/oder einer an einer Welle anliegenden Kraft und ein Verfahren zur Kalibrierung eines Messsystems gemäß den unabhängigen Ansprüchen. Vorteilhafte Ausgestaltungen werden in den Unteransprüchen beansprucht.

Ein erster Aspekt der Erfindung betrifft ein Messsystem zur Bestimmung einer Kraft und/oder eines Drehmoments an einer drehmomentübertragenden Welle, wobei das Messsystem wenigstens drei, insbesondere wenigstens vier, Piezoelemente mit jeweils einer Vorzugsrichtung aufweist, welche jeweils an unterschiedlichen Positionen um eine Drehachse der Welle in einem Kraftfluss, welcher über die Welle übertragen wird, in der Weise angeordnet sind, dass eine Kraft des Kraftflusses, insbesondere ausschließlich, an den Piezoelementen anliegt, wobei die Vorzugsrichtungen jeweils parallel zu oder in einer einzigen Ebene liegen, welche von der Drehachse geschnitten wird, und wobei die Vorzugsrichtungen von wenigstens Zweien, insbesondere wenigstens Dreien, der Piezoelemente zueinander weder parallel noch antiparallel ausgerichtet sind. Bei zwei nicht parallelen oder antiparallelen Vorzugsrichtungen sind die beiden Vorzugsrichtungen vorzugsweise senkrecht zueinander ausgerichtet.

Die in Bezug auf die im ersten Aspekt der Erfindung im Weiteren beschriebenen Merkmale und Vorteile gelten für die weiteren Aspekte der Erfindung entsprechend und umgekehrt.

Ein Kraftfluss im Sinne der Erfindung ist ein Weg einer Kraft und/oder eines Drehmoments in einem mechanischen System von einem Angriffspunkt, insbesondere einer Stelle der Einleitung, bis zu einer Stelle oder mehreren Stellen, an der oder denen die Kraft und/oder das Drehmoment durch eine Reaktionskraft und/oder ein Reaktionsmoment aufgenommen werden. Vorzugsweise setzt sich der Kraftfluss aus einer Kraft, insbesondere einer Querkraft zur Drehrichtung der Welle, und einem Drehmoment, insbesondere um die Drehachse, zusammen.

Ein Leistungsfluss im Sinne der Erfindung ist ein Weg einer Übertragung von Leistung in einem mechanischen System von einer Stelle der Einleitung bis zu einer Stelle oder mehreren Stellen, an welchen die Leistung abgenommen wird.

Eine Fixierungseinrichtung im Sinne der Erfindung dient vorzugsweise zum Tragen, insbesondere Befestigen, der Piezoelemente. Weiter vorzugsweise verbindet die Fixierungseinrichtung die einzelnen Piezoelemente, wodurch diese in einer relativen Position zueinander gehalten werden. Vorzugsweise ist die Fixierungseinrichtung eine Adapterplatte, ein Ringelement, ein Messflansch oder auch ein Befestigungswinkel. Weiter vorzugsweise kann die Fixierungseinrichtung ein Bestandteil einer bestehenden Vorrichtung sein, beispielsweise eines Gehäuses, eines Getriebes oder einer Maschine.

Ein Piezoelement im Sinne der Erfindung ist vorzugsweise ein Messelement, welches eingerichtet ist, eine Kraft, welche über zwei an das Piezoelement anliegende Flächen wirkt, zu messen. Vorzugsweise besteht ein Piezoelement aus dem Piezokristall sowie einer Ladungsableitung bzw. einer elektrischen Verschaltung.

Ein Messsystem im Sinne der Erfindung ist vorzugsweise ein Piezosensor. In diesem Fall dient das Messsystem als Gehäuse der Piezoelemente. Alternativ kann das Messsystem aber auch einzelne Piezosensoren aufweisen, bei welchen die Piezoelemente in einem separaten Gehäuse angeordnet sind.

Eine Maschine im Sinne der Erfindung ist eingerichtet zum Umwandeln von Energie, vorzugsweise einer kinetischen Energie, insbesondere einer Rotation, in elektrische Energie oder umgekehrt oder von chemischer Energie in eine kinetische Energie. Eine Maschine im Sinne der Erfindung weist vorzugsweise ein Gehäuse auf.

Eine Lagervorrichtung im Sinne der Erfindung ist vorzugsweise eine Vorrichtung zum drehbaren Lagern einer Welle, insbesondere ein Wälzlager, Kugellager oder Gleitlager. Vorzugsweise weist auch eine Lagervorrichtung ein Gehäuse auf. Die Lagervorrichtung selbst wird vorzugsweise wiederum selbst auch abgestützt oder gelagert. Weiter Vorzugsweise ist die Lagervorrichtung erfindungsgemäß eine Maschine oder Teil einer Maschine.

Eine Abstützvorrichtung im Sinne der Erfindung ist vorzugsweise eine Vorrichtung zum Abstützen eines Elements gegenüber einer auf dieses Element wirkenden Kraft und/oder eines auf dieses Element wirkenden Drehmoments. Eine Abstützvorrichtung ist vorzugsweise dazu eingerichtet, eine sogenannte Reaktionskraft bzw. Lagerreaktionskraft bereitzustellen. Eine Abstützvorrichtung im Sinne der Erfindung dient vorzugsweise zum Abstützen der Lagervorrichtung. Vorzugsweise ist die Abstützvorrichtung eine Getriebeglocke, ein Gehäuse des Antriebsstrangs oder auch eine Bodenplatte.

Der Begriff "lagerbar" im Sinne der Erfindung bedeutet "kann gelagert werden" oder "gelagert sein".

Der Begriff "verbindbar" im Sinne der Erfindung bedeutet "kann verbunden werden" oder "verbunden sein".

Der Begriff "einleitbar" im Sinne der Erfindung bedeutet "kann eingeleitet werden" oder "eingeleitet sein". Vorzugsweise ist damit das Übertragen einer Kraft von einem Körper auf einen anderen Körper gemeint.

Der Begriff "abstützbar" im Sinne der Erfindung bedeutet "kann abgestützt werden" oder "abgestützt sein".

Der Begriff "hindurchführbar" im Sinne der Erfindung bedeutet "kann durchgeführt werden" oder "hindurchgeführt sein".

Der Begriff "belastbar" im Sinne der Erfindung bedeutet "kann belastet werden" oder "belastet sein".

Der Begriff "anordenbar" im Sinne der Erfindung bedeutet "kann angeordnet werden" oder "angeordnet sein".

Die Erfindung basiert insbesondere auf dem Ansatz, Kräfte und/oder Drehmomente, welche an einer drehmomentübertragenden Welle anliegen, mittels eines Gleichungssystems für Kraftkomponenten und Drehmomentkomponenten auf der Grundlage von Messsignalen der einzelnen Messelemente zu bestimmen.

Hierfür müssen die Vorzugsrichtungen von wenigstens drei Piezoelementen jeweils parallel zu oder in einer Ebene liegen, welche von einer Drehachse der Welle geschnitten wird. Vorzugsweise ist diese Ebene in etwa senkrecht zu der Drehachse der Welle ausgerichtet. Des Weiteren müssen die Vorzugsrichtungen der drei Piezoelemente so ausgerichtet sein, dass verschiedene Kraftkomponenten an verschiedenen Stellen gemessen werden. Daher dürfen wenigstens zwei, vorzugsweise drei, Vorzugsrichtungen zueinander weder parallel noch antiparallel ausgerichtet sein.

Durch die genannte Anordnung lassen sich die Messsignale wenigstens zweier Piezoelemente in linear unabhängige Komponenten zerlegen. Insbesondere kann in der Ebene jede Kraft und jedes Drehmoment, welche auf die Welle wirken, mittels der Messsignale von in der Weise angeordneten Piezoelementen bestimmt werden.

Bei dem erfindungsgemäßen Messsystem können durch Berücksichtigung des Beitrags einzelner Piezoelemente zu verschiedenen Kraftkomponenten und Drehmomentkomponenten alle Piezoelemente zum Bestimmen der Kraft oder des Drehmoments herangezogen werden.

Hierdurch wird vermieden, dass zum Bestimmen für verschiedene Kraftrichtungen und/oder das Drehmoment jeweils unterschiedliche Piezoelemente oder Piezoelement-Gruppen vorhanden sein müssen. Dies ist von Vorteil, da Piezoelemente, welche keinen Beitrag zur Messung einer Kraftkomponente oder des Drehmoments liefern, in Bezug auf diese Kraftkomponenten oder das Drehmoment einen Kraftnebenschluss bilden, welcher das Messergebnis verfälscht. Bei dem erfindungsgemäßen Messsystem ergibt sich ein Kraftnebenschluss allenfalls über Befestigungsmittel, mit welchen die Piezoelemente befestigt werden.

Jene Anteile von Messsignalen eines Piezoelements, welche nicht zu der/dem jeweils betrachteten Kraftkomponente oder Drehmoment beitragen, werden erfindungsgemäß nicht berücksichtigt. Eine paarweise Anordnung von Piezoelementen mit antiparallel ausgerichteten Vorzugsrichtungen zum Auslöschen von unerwünschten Anteilen der Messsignale ist daher mit dem erfindungsgemäßen Messsystem nicht notwendig.

Vorzugsweise ist das Messsystem hierbei eingerichtet, um sowohl tangential zur Drehrichtung der Welle wirkende Kräfte zu messen, welche zum Drehmoment beitragen, als auch Querkräfte, welche senkrecht zur Drehrichtung der Welle wirken, insbesondere in zwei orthogonalen Richtungen in der Ebene, und welche zu einem Taumeln der Welle beitragen können.

Auch können erfindungsgemäß vorzugsweise beliebig viele Piezoelemente zur Bestimmung der einzelnen Kraftrichtungen oder des Drehmoments verwendet werden. Hierdurch kann die Messgenauigkeit wesentlich erhöht werden.

Durch die Verwendung von Piezoelementen bei der Messung können hochdynamische Kraftänderungen bzw. Drehmomentänderungen registriert werden.

Werden mehr als drei Piezoelemente zur Messung verwendet, kann die Messgenauigkeit nochmals erhöht werden. Selbiges gilt, wenn mehr als zwei Vorzugsrichtungen der Piezoelemente zueinander weder parallel noch antiparallel ausgerichtet sind.

In einer vorteilhaften Ausgestaltung des erfindungsgemäßen Messsystems, insbesondere mit mehr als drei Piezoelementen, sind die Piezoelemente geometrisch in der Weise angeordnet, dass in Bezug auf ihre jeweilige Position zueinander in einer Projektion auf die Ebene keine Spiegelachse und/oder kein Spiegelpunkt existiert bzw. existieren.

Durch das erfindungsgemäße Messsystem werden insbesondere Anordnungen von Piezoelementen ermöglicht, die nicht paarweise spiegelverkehrt angeordnet sein müssen. Durch die Asymmetrie der Anordnung der Piezoelemente wird eine besonders genaue Bestimmung der Kraft oder des Drehmoments ermöglicht.

Vorzugsweise ist die Vorzugsrichtung wenigstens eines Piezoelements nicht tangential zu einer Drehrichtung der Welle.

In einer weiteren vorteilhaften Ausgestaltung des Messsystems sind die Piezoelemente geometrisch in der Weise angeordnet, dass wenigstens zwei Piezoelemente einen unterschiedlichen radialen Abstand der Drehachse aufweisen und/oder dass zwei Kreissektoren um die Drehachse zwischen jeweils zwei Piezoelementen einen unterschiedlichen Winkel aufspannen.

Auch hierdurch wird eine große Asymmetrie der Anordnung der Piezoelemente gewährleistet und damit die Messgenauigkeit erhöht.

In einer weiteren vorteilhaften Ausgestaltung weist das erfindungsgemäße Messsystem des Weiteren eine Signalverarbeitungseinrichtung auf, welche eingerichtet ist, um die Kraft und/oder das Drehmoment auf die Welle mittels einer, insbesondere orthogonalen, Zerlegung der jeweiligen Vorzugsrichtung der Piezoelemente oder der jeweils durch die einzelnen Piezoelemente gemessenen Kräfte in wenigstens zwei Komponenten zu bestimmen, wobei jeweils parallele Komponenten aufsummiert werden. Vorzugsweise ist dabei eine erste Komponente wenigstens im Wesentlichen tangential zur Drehrichtung der Welle, und eine zweite Komponente ist vorzugsweise wenigstens im Wesentlichen senkrecht zu der Drehrichtung.

Durch die Zerlegung der Vorzugsrichtung oder der Kräfte kann eine Vielzahl an Messsignalen von Piezoelementen berücksichtigt werden, welche jeweils zum Messsignal bzw. zur Kraft in einer definierten Richtung beitragen.

Auch wenn die Lösung eines Gleichungssystems für drei Piezoelemente, welche erfindungsgemäß angeordnet sind, eindeutig ist, kann, je mehr Piezoelemente in dem Gleichungssystem berücksichtigt werden, eine genauere Auflösung des Systems erreicht werden. Vorzugsweise werden die Kraftkomponenten und/oder das Drehmoment hierfür aus Kombinationen jeweils dreier Messsignale errechnet und anschließend eine Mittelung über die Anzahl der Kombinationen vorgenommen.

Die Zerlegung des Messsignals in Komponenten der Vorzugsrichtung oder der Kraft hat darüber hinaus den Vorteil, dass die genaue Einbausituation der Piezoelemente in Bezug auf die Vorzugsrichtung der einzelnen Piezoelemente nicht bekannt sein muss. Auch die Anordnung der Piezoelemente in Bezug auf die Welle, insbesondere deren radialer Abstand, muss nicht bekannt sein. Beide Parameter können in diesem Fall durch Kalibrierungsmessungen bestimmt werden.

Vorzugsweise werden Messsignale von allen Piezoelementen, deren Vorzugsrichtung jeweils parallel zu oder in der Ebene liegen, zum Bestimmen der Kraft und/oder des Drehmoments herangezogen. Hierdurch wird vermieden, dass Anteile des Kraftflusses über einen Kraftnebenschluss eines nicht an der Messung beteiligten Sensors verloren gehen.

In einer weiteren vorteilhaften Ausgestaltung des erfindungsgemäßen Messsystems ist die Ebene wenigstens im Wesentlichen senkrecht zu einer Drehachse der Welle ausgerichtet.

Durch diese Ausrichtung der Ebene und die damit verbundene Ausrichtung der Vorzugsrichtungen der Piezoelemente kann eine besonders hohe Auflösung der Messung in Bezug auf das Drehmoment und von Querkräften zur Drehrichtung realisiert werden. Liegt die Ebene nicht senkrecht zu der Drehachse, werden zur Bestimmung der Querkräfte und des Drehmoments Messsignale nur anteilig berücksichtigt. Die Anteile entsprechen hierbei jeweils der Projektion der Vorzugsrichtung des jeweiligen Piezoelements auf eine fiktive Ebene, die normal bzw. senkrecht zur Drehachse steht.

In einer weiteren vorteilhaften Ausgestaltung des erfindungsgemäßen Messsystems liegt eine Fläche der Piezoelemente, über welche die Kraft eingeleitet wird, wenigstens im Wesentlichen parallel zu der Ebene. Hierdurch können Scherkräfte besonders gut in das Piezoelement eingeleitet werden.

In einer weiteren vorteilhaften Ausgestaltung des erfindungsgemäßen Messsystems bilden die Piezoelemente einen Krafthauptschluss in Bezug auf den Kraftfluss, und ein Kraftnebenschluss, insbesondere an Befestigungsmitteln, nimmt weniger als 10 %, bevorzugt weniger als 5 %, und am Bevorzugtesten weniger als 2 % der Kraft des Kraftflusses auf. Hierdurch wird eine besonders genaue Bestimmung der Kraft und/oder des Drehmoments erreicht.

In einer weiteren vorteilhaften Ausgestaltung des erfindungsgemäßen Messsystems ist neben jedem Piezoelement in Richtung der Drehachse der Welle ein weiteres Piezoelement angeordnet, das in Vorzugsrichtung nicht parallel, insbesondere wenigstens im Wesentlichen senkrecht, zu der Ebene ausgerichtet ist, wobei die Piezoelemente mit dem jeweils daneben angeordneten weiteren Piezoelement Paare bilden, wobei die Kraft des Kraftflusses, insbesondere im Wesentlichen, an den Paaren anliegt.

Durch das Vorsehen dieser weiteren Piezoelemente kann nicht nur eine zweidimensionale Messung von Komponenten in der Ebene vorgenommen werden, sondern es können in drei Dimensionen alle Kraftkomponenten gemessen werden. Dies ist insbesondere dann sinnvoll, wenn auch Druck- oder Zugkräfte in Richtung der Drehachse der Welle bestimmt werden sollen. Durch die besonders vorteilhafte Anordnung in Paaren mit jenen Piezoelementen, deren Vorzugsrichtung parallel zu oder in der Ebene angeordnet ist, wird ein Kraftnebenschluss auch hier möglichst gering gehalten oder sogar vollständig unterbunden.

In einer weiteren vorteilhaften Ausgestaltung weist das Messsystem eine Fixierungseinrichtung, insbesondere einen Lagerkäfig, auf, wobei die Fixierungseinrichtung die Piezoelemente trägt und zueinander positioniert.

Durch das Vorsehen einer solchen Fixierungseinrichtung kann das Messsystem als geschlossene Einheit verwendet werden, in welcher die einzelnen Piezoelemente eine festgelegte Position zueinander haben. Insbesondere kann ein solches Messsystem vorkalibiriert werden, wobei die Ausrichtung der einzelnen Vorzugsrichtungen der Piezoelemente und die Position der einzelnen Piezoelemente in einem Bezugssystem der Fixierungseinrichtung vordefiniert sind. Weiter vorzugsweise sind die Piezoelemente zumindest 50 %, bevorzugter zumindest 70 %, noch bevorzugter zumindest 90 %, in einer Vertiefung, insbesondere einer Sacklochbohrung, an der Fixierungseinrichtung aufgenommen.

In einer weiteren vorteilhaften Ausgestaltung des erfindungsgemäßen Messsystems sind die Piezoelemente um die Drehachse ungleichmäßig verteilt. Hierdurch lassen sich Messanordnungen realisieren, bei welchen das Drehmoment aus konstruktiven Gründen nicht an allen Stellen an einem Umfang um die um die Drehachse bzw. bestimmt werden kann.

In einer weiteren vorteilhaften Ausgestaltung sind alle Piezoelemente und/oder Paare innerhalb eines definierten Kreissektors um die Drehachse mit einem Winkel α < 300°, bevorzugt α < 240°, bevorzugter α < 180°, am Bevorzugtesten α < 120°, angeordnet, wobei eine Fixierungseinrichtung vorzugsweise in der Weise ausgebildet ist, dass diese diesen Winkelsektor abdeckt.

In einer weiteren vorteilhaften Ausgestaltung des erfindungsgemäßen Messsystems ist die Welle durch eine Lagervorrichtung, insbesondere eine Maschine, deren Aus- und/oder Eingangswelle durch die drehmomentübertragende Welle gebildet ist, gelagert, wobei eine Fixierungseinrichtung die Piezoelemente und/oder Paare trägt und in der Weise ausgebildet ist, dass mittels der Piezoelemente eine Kraft, insbesondere Scherkraft, zwischen der Lagervorrichtung und einer Abstützvorrichtung zum Abstützen der Lagervorrichtung messbar ist.

Durch diese Ausgestaltung brauchen Kräfte und/oder Drehmomente, welche an der drehmomentübertragenden Welle anliegen, nicht unmittelbar an dieser Welle gemessen werden.

Insbesondere muss keine Messvorrichtung angesetzt werden, welche mit der drehmomentübertragenden Welle verschraubt oder in sonstiger Weise an dieser befestigt ist, wie beispielsweise in der eingangs zitierten DE 2009 014 284 B4 beschrieben. Im Gegensatz hierzu werden in dieser Ausgestaltung jene Kräfte, welche als Reaktionskräfte an einer Lagervorrichtung der Welle anliegen, gemessen, und aus diesen Kräften auf die Kraft geschlossen, welche die Welle ausübt bzw. auf das Drehmoment, welches an der Welle anliegt. Mit anderen Worten werden die Kräfte erfindungsgemäß an anderer Stelle als an der drehmomentübertragenden Welle im Kraftfluss, aber außerhalb des Leistungsflusses, gemessen, und aus diesen Kräften wird das an der drehmomentübertragenden Welle anliegende Drehmoment bestimmt, insbesondere berechnet.

Zum einen kann die Lagervorrichtung aufgrund der Festigkeit und Steifigkeit der als Messelemente eingesetzten Piezoelemente vorzugsweise vollständig mittels der Piezoelemente abgestützt bzw. gelagert werden. Auch in dieser Ausgestaltung liegt daher vorzugsweise die volle Belastung bzw. der volle Kraftfluss an den Piezoelementen an - Kraftnebenflüsse können wenigstens vernachlässigt werden.

In dieser Ausgestaltung verfälscht das Messsystem nicht das Messergebnis, da das Messsystem kein Bestandteil der rotierenden Welle ist. Insbesondere wird die bewegte Masse bzw. rotierende Masse eines zu vermessenden drehmomentübertragenden Systems, insbesondere eines am Prüfstand zu testenden Systems, nicht verändert. Durch die Messvorrichtung werden auch keine Elastizitäten zu dem drehmomentübertragenden System hinzugefügt, welche als Schwingungsdämpfer wirken würden oder die Eigenfrequenzen des drehmomentübertragenden Systems beeinflussen, insbesondere verfälschen, würden. Dies ist insbesondere ein Vorteil der Piezoelemente gegenüber Systemen mit Dehnungsmessstreifen als Messelemente, die bauartbedingt im Vergleich zu Piezoelementen relativ weich sind und damit das zu testende System beeinflussen.

Mittels der Ausgestaltung ist es des Weiteren möglich, die Bewegung der drehmomentübertragenden Welle zu analysieren und Unstetigkeiten und Schwingungen in der Wellenbewegung zu erkennen. Insbesondere kann eine Taumelbewegung der Welle erkannt und gemessen werden. Mit einem Messsystem, wie einem Messflansch, der an der Welle angeordnet ist, ist dies nicht oder nur schwer möglich. Insbesondere kann mit einem solchen Messflansch nicht gewährleistet werden, dass dieser sich an jener Stelle der Welle befindet, welche tatsächlich taumelt. Auch die Kräfte, welche die drehmomentübertragende Welle auf deren Lagervorrichtung bzw. eine Maschine, insbesondere einen Motor, ausüben, können mittels der Erfindung bestimmt werden. Mit einem Messflansch können solche Kräfte nicht gemessen und aus den zur Verfügung stehenden Messungen auch nicht oder wenigstens nicht exakt bestimmt werden.

Mittels der Ausgestaltung können somit ein an der Welle anliegendes dynamisches Drehmoment und auch Schwingungen in vertikaler und horizontaler Richtung der Welle bestimmt werden.

In einer weiteren vorteilhaften Ausgestaltung ist die Fixierungseinrichtung des Weiteren in der Weise ausgebildet, dass die Kraft parallel zu Stirnflächen der Piezoelemente und/oder Paare mittels einer kraftschlüssigen Verbindung einleitbar ist.

Diese Ausgestaltung bietet die Möglichkeit, ein piezoelektrisches Scherelement als Piezoelement einzusetzen. Insbesondere können hierdurch Kräfte in zwei entgegengesetzten Richtungen mittels eines einzigen Piezoelements gemessen werden, ohne dass eine stoffschlüssige Verbindung zwischen den Stirnflächen der Piezoelemente und den jeweils krafteinleitenden Elementen hergestellt werden muss.

Vorzugsweise sind die Piezoelemente mit der Fixierungseinrichtung und/oder der Lagervorrichtung und/oder der Abstützvorrichtung durch Kraftschluss verbindbar. Weiter vorzugsweise ist die Fixierungseinrichtung des Weiteren in der Weise ausgebildet, dass eine Kraft wenigstens im Wesentlichen tangential zur Drehrichtung und/oder parallel zur Drehachse der Welle messbar ist.

In einer weiteren vorteilhaften Ausgestaltung des erfindungsgemäßen Messsystems weisen die Piezoelemente jeweils einen Hohlraum, insbesondere einen Hohlzylinder, auf, durch welchen jeweils eine Befestigungseinrichtung, insbesondere eine Spannschraube, führbar ist.

In einer weiteren vorteilhaften Ausgestaltung des erfindungsgemäßen Messsystems weist auch die Fixierungseinrichtung Hohlräume auf, welche mit dem Hohlraum des Piezosensors wenigstens teilweise fluchten und in welchen die Spannschraube lagerbar ist.

Durch das Vorsehen von Hohlräumen in den Piezoelementen und/oder der Fixierungseinrichtung kann insbesondere eine Vorspannung bzw. eine Vorbelastung mittels Befestigungseinrichtungen auf die Piezoelemente aufgebracht werden, wodurch eine kraftschlüssige Verbindung zwischen deren Stirnseiten und einem weiteren Element hergestellt werden kann.

Ein zweiter Aspekt der Erfindung betrifft einen Prüfstand oder ein Fahrzeug mit einem Messsystem nach dem ersten Aspekt der Erfindung.

Ein dritter Aspekt der Erfindung betrifft eine Messanordnung zum Bestimmen einer Kraft und/oder eines Drehmoments an einer drehmomentübertragenden Welle, aufweisend eine auf dem Piezoeffekt beruhendes Messsystem und eine Welle, wobei die Piezoelemente zwischen einem ersten Teil der Welle und einem zweiten Teil der Welle in der Weise angeordnet sind, dass mittels der Piezoelemente eine Kraft, insbesondere Scherkraft, zwischen dem ersten Teil und dem zweiten Teil messbar ist.

In einer vorteilhaften Ausgestaltung der Messanordnung besteht die Welle aus zwei Abschnitten, welche über eine Kupplungseinrichtung verbindbar sind, wobei das Messsystem die Kraft und/oder das Drehmoment an einem der beiden Abschnitte bestimmt.

Ein vierter Aspekt der Erfindung betrifft eine Messanordnung zur Bestimmung einer Kraft und/oder eines Drehmoments an einer drehmomentübertragenden Welle, aufweisend ein auf dem Piezoeffekt beruhendes Messsystem, eine Welle, eine Lagervorrichtung und eine Abstützvorrichtung der Lagervorrichtung, wobei die Lagervorrichtung die Welle lagert, und wobei das Messsystem eine rotierende Masse der Welle und/oder eine rotierende Masse rotierender Teile einer Gesamtheit aus Welle und Lagervorrichtung nicht verändert. Vorzugsweise kommt hierbei ein Messsystem zum Einsatz, mittels welchem die Reaktionskräfte einer Lagerung der Welle gemessen werden können.

Vorzugsweise ist die Lagervorrichtung hierbei eine Maschine, insbesondere eine Belastungs- und/oder Antriebsmaschine, vorzugsweise eine Elektro- oder Brennkraftmaschine.

Ein fünfter Aspekt der Erfindung betrifft ein Verfahren zur Bestimmung eines an einer Welle anliegenden Drehmoments und/oder einer an einer Welle anliegenden Kraft, wobei die Kraft und/oder das Drehmoment auf die Welle mittels einer orthogonalen Zerlegung der jeweiligen Vorzugsrichtungen der Piezoelemente oder der jeweils durch die einzelnen Piezoelemente gemessenen Kräfte in Komponenten bestimmt wird, wobei jeweils parallele Komponenten aufsummiert werden.

In einer vorteilhaften Ausgestaltung weist das Verfahren die folgenden Arbeitsschritte auf:
Erfassen wenigstens eines ersten Signals eines ersten Piezosensors, eines zweiten Signals eines zweiten Piezosensors, und eines dritten Signals eines dritten Piezosensors;
Aufsummieren der Signale in wenigstens einer Richtung anteilig entsprechend einer jeweiligen Komponente der Vorzugsrichtung der Piezoelemente in dieser Richtung; und Ableiten des Drehmoments und/oder der Kraft aus den aufsummierten Signalen;
   oder
Ableiten der Drehmomente und/oder der Kräfte für jedes einzelne Signal in wenigstens eine Richtung anteilig entsprechend einer jeweiligen Komponente der Vorzugsrichtungen der Piezoelemente in dieser Richtung; und
Aufsummieren der Drehmomente und/oder Kräfte.

Ein sechster Aspekt der Erfindung betrifft ein Verfahren zur Kalibrierung eines Messsystems, folgende Arbeitsschritte aufweisend:
Aufbringen einer definierten Kraft in einer ersten Richtung parallel zur Ebene;
Aufbringen einer definierten Kraft in einer zweiten Richtung parallel zu der Ebene;
Erfassen wenigstens eines ersten Signals eines ersten Piezoelements, eines zweiten Signals eines zweiten Piezoelements, und eines dritten Signals eines dritten Piezoelements; und
Ableiten von Vorzugsrichtungen der Piezoelemente auf der Grundlage der erfassten Signale und ersten und zweiten Richtung der definierten Kräfte.

Ein siebter Aspekt der Erfindung betrifft ein Verfahren zur Kalibrierung eines Messsystems, folgende Arbeitsschritte aufweisend:
Aufbringen eines definierten Drehmoments um die Drehachse der Welle;
Erfassen wenigstens eines ersten Signals eines ersten Piezosensors, eines zweiten Signals eines zweiten Piezosensors und eines dritten Signals eines dritten Piezosensors; und
Ableiten von Abständen der Piezoelemente, insbesondere in Bezug auf die Drehachse der Welle der Piezoelemente auf der Grundlage der erfassten Signale und des definierten Drehmoments.

Weitere Aspekte der Erfindung betreffen ein Computerprogramm, welches eingerichtet ist, wenn sie von einem Computer ausgeführt werden, diesen dazu zu veranlassen, die Schritte eines erfindungsgemäßen Verfahrens durchzuführen, sowie ein entsprechendes computerlesbares Medium. Die erfindungsgemäßen Verfahren können folglich computergestützt durchgeführt werden.

Weitere Vorteile und Merkmale gehen aus der nachfolgenden Beschreibung der bevorzugten Ausführungsbeispiele in Bezug auf die Figuren hervor. Die Figuren zeigen wenigstens teilweise schematisch:
- **Fig. 1**: ein erstes Ausführungsbeispiel einer Messanordnung zur Bestimmung einer Kraft und/oder eines Drehmoments an einer drehmomentübertragenden Welle;
- **Fig. 2**: eine Anordnung von Piezoelementen eines ersten Ausführungsbeispiels eines Messsystems;
- **Fig. 3**: eine Anordnung von Piezoelementen eines zweiten Ausführungsbeispiels eines Messsystems;
- **Fig. 4**: eine Anordnung von Piezoelementen eines dritten Ausführungsbeispiels eines Messsystems;
- **Fig. 5**: eine perspektivische Ansicht eines viertes Ausführungsbeispiels eines Messsystems;
- **Fig. 6**: ein zweites Ausführungsbeispiel einer Messanordnung;
- **Fig. 7**: ein drittes Ausführungsbeispiel einer Messanordnung;
- **Fig. 8**: ein viertes Ausführungsbeispiel einer Messanordnung;
- **Fig. 9**: eine perspektivische Ansicht eines Ausschnitts einer Messanordnung mit einer Messvorrichtung gemäß dem vierten Ausführungsbeispiel nach Fig. 8;
- **Fig. 10a und 10 b**: eine Draufsicht und eine Querschnittsansicht eines fünften Ausführungsbeispiels eines Messsystems;
- **Fig. 11a und 11b**: eine perspektivische Ansicht und eine Querschnittsansicht eines sechsten Ausführungsbeispiels eines Messsystems; und
- **Fig. 12**: eine schaltungstechnische Darstellung eines Messsystems gemäß aller Ausführungsbeispiele.

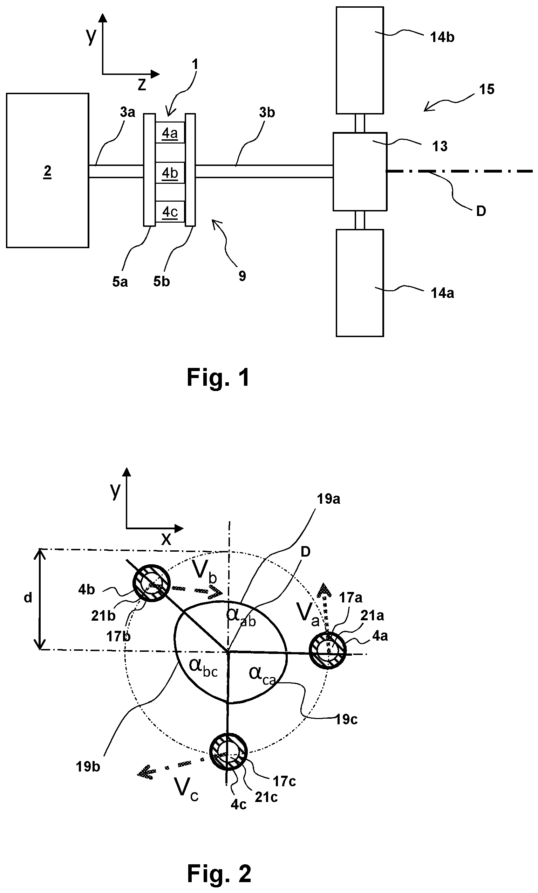

**Fig. 1** zeigt eine Draufsicht auf ein erstes Ausführungsbeispiel einer Messanordnung 9 zur Bestimmung einer Kraft und/oder eines Drehmoments an einer drehmomentübertragenden Welle 3a, 3b auf einem Antriebsprüfstand 15. Die Welle 3a, 3b verbindet hierbei einen Motor 2, welcher unter anderem als Lagervorrichtung für die Welle 3a, 3b dient, mit einem Getriebe und Differential 13, welches wiederum über Achsabschnitte mit Raddynanometern 14a, 14b verbunden ist.

Zwischen einem ersten Abschnitt 3a der Welle und einem zweiten Abschnitt 3b der Welle ist ein Messsystem 1 mit einem aus zwei Teilen bestehenden Messflansch 5a, 5b als Fixierungseinrichtung angeordnet. Der erste Abschnitt 3a der Welle ist mit einem ersten Teil 5a des Messflansches und der zweite Abschnitt 3b der Welle ist mit einem zweiten Teil 5b des Messflansches drehfest verbunden. Drei Piezoelemente 4a, 4b, 4c sind zwischen den beiden Teilen 5a, 5b des Messflansches angeordnet und mit den Teilen 5a, 5b der Messflansche ebenfalls fest verbunden, insbesondere mittels einer kraftschlüssigen Verbindung.

Mittels dieser Messanordnung 9 kann ein Kraftfluss von einer Abstützvorrichtung 10 (nicht dargestellt) über den Motor 2, den ersten Abschnitt der Welle 3a, den ersten Teil 5a des Messflansches, die drei Piezoelemente 4a, 4b, 4c, den zweiten Teil 5b des Messflansches und den zweiten Abschnitt 3b der Welle, das Getriebe und Differential 13 und die Achsteile zu den Raddynanometern 14a, 14b, welche ihrerseits wiederum durch geeignete Mittel abgestützt werden, realisiert werden. Ein möglicher Leistungsfluss verläuft hierbei von dem Motor 2 über die Welle 3a, 3b und den Messflansch 5a, 5b sowie das Getriebe und Differential 13 zu den Raddynanometern 14a, 14b.

Über die Teile des Messflansches 5a, 5b wird eine anliegende Kraft, insbesondere über Stirnflächen der Piezoelemente 4a, 4b, 4c, in die Piezoelemente eingeleitet bzw. liegt an den Piezoelementen 4a, 4b, 4c an. Das Messsystem 1 ist in Fig. 1 in Draufsicht auf eine Ebene dargestellt, welche durch die Y-Achse und die Z-Achse eines dargestellten Bezugssystems aufgespannt werden.

**Fig. 2** zeigt eine Anordnung von Piezoelementen 4a, 4b, 4c eines ersten Ausführungsbeispiels eines Messsystems 1, wie es beispielsweise in dem ersten Ausführungsbeispiel einer Messanordnung 9 nach Fig. 1 zum Einsatz kommen kann.

Die Anordnung der Piezoelemente 4a, 4b, 4c ist dabei in einer Ebene dargestellt, welche durch die Y-Achse und die X-Achse des Bezugssystems nach Fig. 1 aufgespannt wird. Daher sind die Stirnflächen 17a, 17b, 17c der Piezoelemente sichtbar.

Die Mittelpunkte der Piezoelemente 4a, 4b, 4c sind alle in einem Abstand d von dem Mittelpunkt, durch welchen die Drehachse D einer Welle 3 (nicht dargestellt) verläuft, angeordnet. Dabei nehmen die Piezoelemente 4a, 4b, 4c jeweils verschiedene Positionen um die Drehachse D bzw. den Mittelpunkt ein. Der strichpunktierte Kreis verläuft um die Welle bzw. den Mittelpunkt und gibt die Drehrichtung der Piezoelemente 4a, 4b, 4c an jedem Punkt um die Drehachse D bzw. den Mittelpunkt bei einer Drehung der Welle 3 (nicht dargestellt) an.

Jedes der Piezoelemente 4a, 4b, 4c weist jeweils eine andere Vorzugsrichtung Vₐ, V_{b}, V_{c} auf, welche in einer Ebene liegen, die durch die X-Achse und die Y-Achse aufgespannt wird. Vorzugsweise weisen die drei Vorzugsrichtungen Vₐ, V_{b}, V_{c} in unterschiedliche Richtungen und sind daher weder parallel noch antiparallel ausgerichtet. Weiter vorzugsweise sind jedoch nur zwei der drei Vorzugsrichtungen Vₐ, V_{b} weder parallel noch antiparallel ausgerichtet. Die dritte Vorzugsrichtung V_{c} kann in diesem Fall parallel zu einer der beiden anderen Vorzugsrichtungen Vₐ, V_{b} ausgerichtet sein.

Zwischen den Positionen der einzelnen Piezoelemente 4a, 4b, 4c werden in Bezug auf die Drehachse D Winkelsektoren 19a, 19b, 19c aufgespannt. Der Winkelsektor 19a zwischen einem ersten Piezoelement 4a und einem zweiten Piezoelement 4b weist dabei einen Winkel α_{ab} auf, der Winkelsektor 19b zwischen dem zweiten Piezoelement 4b und einem dritten Piezoelement 4c einen Winkel α_{bc} und der Winkelsektor 19c zwischen dem dritten Piezoelement 4c und dem ersten Piezoelement 4a einen Winkel α_{ca}.

Vorzugsweise weisen wenigstens zwei der Winkel α_{ab}, α_{bc}, α_{ca} der Winkelsektoren unterschiedliche Werte auf.

Alle Piezoelemente 4a, 4b, 4c weisen eine Bohrung 21a, 21b, 21cauf, durch welche ein Befestigungsmittel, insbesondere ein Bolzen oder eine Schraube (nicht dargestellt), geführt werden kann. Über die Stirnflächen 17a, 17b, 17c kann eine Scherkraft eingeleitet werden.

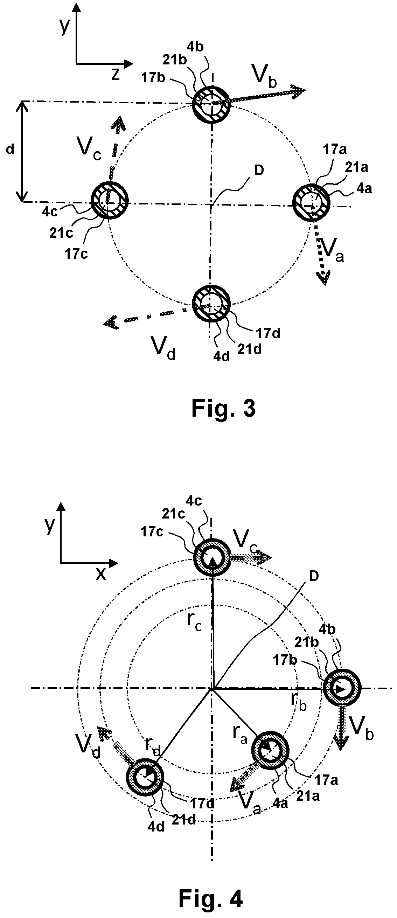

**Fig. 3** zeigt eine Anordnung von Piezoelementen 4a, 4b, 4c eines zweiten Ausführungsbeispiels eines Messsystems 1.

Wie in Fig. 2 sind die Piezoelemente in Draufsicht auf die Stirnflächen 17a, 17b, 17c, 17d dargestellt. Auch in Fig. 3 ist die Blickrichtung senkrecht zu der Ebene, welche durch die X-Achse und die Y-Achse des Bezugssystems aufgespannt wird (α_{ab}, α_{bc}, α_{ca}), und auch die Anordnung nach Fig. 2 kann in einer Messanordnung 9 der Fig. 1 zum Einsatz kommen.

Die Vorzugsrichtungen Vₐ, V_{b}, V_{c} V_{d} der einzelnen Piezoelemente 4a, 4b, 4c, 4d zeigen in der Anordnung der Piezoelemente 4a, 4b, 4c, 4d in verschiedene Richtungen und sind nicht tangential zur Drehrichtung, welche durch den strichlierten Kreis angedeutet wird, liegen jedoch auch, wie in Fig. 2, in einer Ebene, welche durch die X-Achse und die Y-Achse des Bezugssystems aufgespannt wird, und damit senkrecht zu einer Welle 3 (nicht dargestellt), deren Drehachse D durch den Mittelpunkt aus der Bildebene heraus verläuft.

Die Vorzugsrichtung V_{b} des zweiten Piezoelements 4b ist in der dargestellten Anordnung antiparallel zu der Vorzugsrichtung V_{d} des vierten Piezoelements 4d ausgerichtet.

Alle Piezoelemente 4a, 4b, 4c, 4d weisen, wie in Fig. 2, eine Bohrung 21a, 21b, 21c, 21d auf, durch welche ein Befestigungsmittel, insbesondere ein Bolzen oder eine Schraube (nicht dargestellt), geführt werden kann. Über die Stirnflächen 17a, 17b, 17c, 17d kann eine Scherkraft eingeleitet werden.

**Fig. 4** zeigt eine dritte Anordnung von vier Piezoelementen 4a, 4b, 4c, 4d für ein drittes Ausführungsbeispiel eines Messsystems, wie es ebenfalls in einer Messanordnung 9 nach Fig. 1 zum Einsatz kommen kann.

Im Gegensatz zu den Anordnungen der Figuren 2 und 3 sind die Piezoelemente 4a, 4b, 4c, 4d in unterschiedlichen Abständen Rₐ, R_{b}, R_{c}, R_{d} von dem Mittelpunkt D der Anordnung, durch welchen bei einem Messsystem die Welle 3 (nicht dargestellt) verlaufen würde, angeordnet. Eine Drehrichtung der Piezoelemente 4a, 4b, 4c, 4d um eine Drehachse D bzw. den Mittelpunkt ist wiederum durch strichpunktierte Kreise angedeutet.

Die Vorzugsrichtungen Vₐ, V_{b}, V_{c}, V_{d} der Piezoelemente 4a, 4b, 4c, 4d verlaufen jeweils tangential zu der Drehrichtung.

Die Piezoelemente 4a, 4b, 4c, 4d sind des Weiteren, im Gegensatz zu Fig. 3, ungleichmäßig über den Umfang um die Drehachse D bzw. den Mittelpunkt angeordnet.

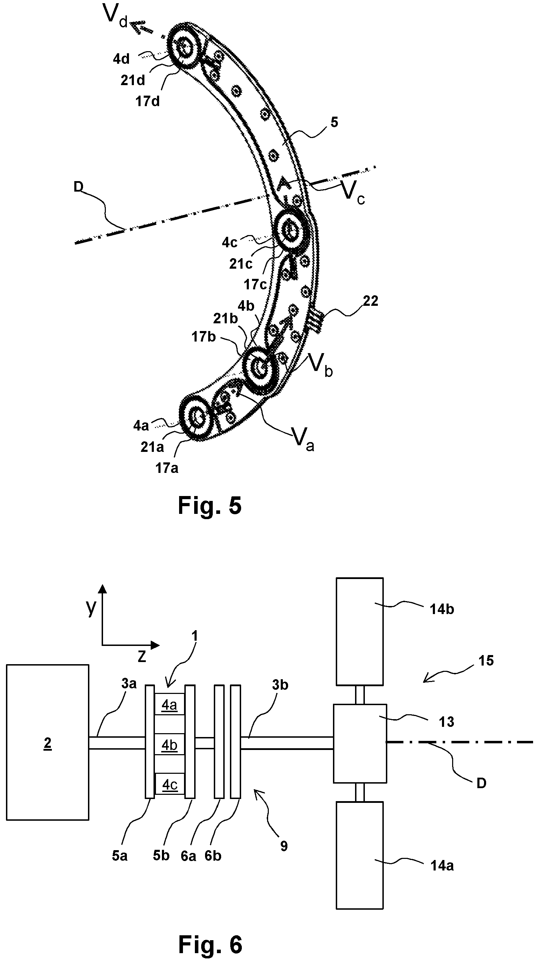

**Fig. 5** zeigt eine weitere Anordnung von Sensoren eines vierten Ausführungsbeispiels des Messsystems 1.

In dem dargestellten Messsystem 1 werden die einzelnen Piezoelemente 4a, 4b, 4c, 4d durch eine Fixierungseinrichtung 5 gelagert. Die Vorzugsrichtungen Vₐ, V_{b}, V_{c}, V_{d} der Piezoelemente 4a, 4b, 4c, 4d sind vorzugsweise am Verlauf der Fixierungseinrichtung 5 ausgerichtet, können aber auch in andere Richtungen zeigen, solange jede einzelne der Vorzugsrichtungen Vₐ, V_{b}, V_{c}, V_{d} parallel zu oder in einer einzigen Ebene liegen, insbesondere jener Ebene, welche auch durch die Fixierungseinrichtung 5 definiert wird.

Die Drehachse D einer Welle 3 (nicht dargestellt), an welcher eine Kraft und/oder ein Drehmoment anliegt (nicht dargestellt), ist in diesem Ausführungsbeispiel in Bezug auf

Fig. 5 in einem Bereich links von der Fixierungseinrichtung 5 angeordnet. Strichpunktiert ist eine mögliche solche Drehachse D angedeutet.

Die Drehachse D muss dabei weder im gleichen Abstand von jedem der Piezoelemente 4a, 4b, 4c, 4d angeordnet sein, noch muss die Drehachse D durch einen Mittelpunkt verlaufen, welcher durch die Krümmung der Fixierungseinrichtung 5 gegebenenfalls definiert wird.

**Fig. 6** zeigt ein zweites Ausführungsbeispiel einer Messanordnung 9 auf einem Prüfstand 15.

Abweichend von der Messanordnung 9 nach Fig. 1 weist die Messanordnung 9 der Fig. 6 des Weiteren eine Kupplung 6a, 6b auf. Ein erster Kupplungsteil 6a ist hierbei mit dem zweiten Teil 5b des Messflansches drehfest verbunden und kann mit einem zweiten Kupplungsteil 6b lösbar in kraftschlüssigen Kontakt gebracht werden.

Je nach Position der Kupplungsscheiben 6a, 6b zueinander und der in dem Kraftfluss von dem Motor 2 zu den Raddynanometern 14a, 14b zu übertragenden Leistungen liegt an dem Messflansch 5a, 5b ein zu bestimmendes Drehmoment an.

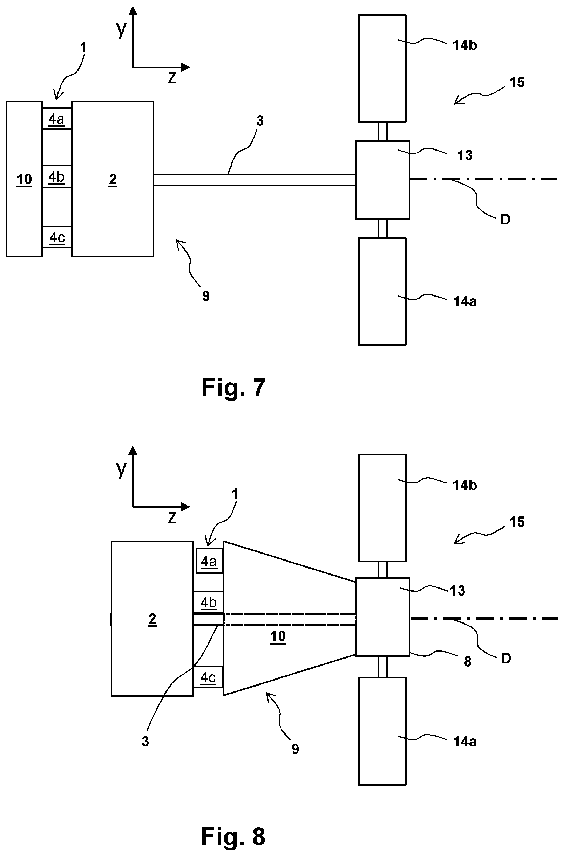

**Fig. 7** zeigt ein drittes Ausführungsbeispiel einer Messanordnung 9 auf einem Prüfstand 15.

Im Unterschied zu der Messanordnung 9 nach Fig. 1 und Fig. 6 erfolgt eine Messung der Kraft und/oder des Drehmoments nicht im Leistungsfluss zwischen dem Motor 2 und den Raddynanometern 14a, 14b bzw. zwischen dem Motor 2 und dem Getriebe und Differential 13. Vielmehr wird das Drehmoment und/oder werden die Kräfte, welche an der drehmomentübertragenden Welle 3 anliegen, außerhalb des Leistungsflusses über die Reaktionskräfte bestimmt, mit welchen der Motor 2 durch eine Abstützvorrichtung 10 am Prüfstand abgestützt wird.

Entsprechend sind die Piezoelemente in Kraftfluss zwischen der Abstützvorrichtung 10 und dem Motor 2 angeordnet.

Wie bei den anderen Ausführungsbeispielen mit Messflansch 5a, 5b in der Welle 3 wird auch hier zwischen den Piezoelementen 4a, 4b, 4c und dem Motor 2 sowie der Abstützvorrichtung 10 eine drehmomentübertragende Verbindung hergestellt, indem die Piezoelemente 4a, 4b, 4c bzw. deren Stirnseite mit entsprechenden Abschnitten des Motors 2 und der Abstützvorrichtung 10 einen Reibschluss bilden.

**Fig. 8** zeigt ein viertes Ausführungsbeispiel einer Messanordnung 9, welche insbesondere in einem Fahrzeug zum Einsatz kommen kann.

Im Gegensatz zu dem Ausführungsbeispiel nach Fig. 7 ist die Abstützvorrichtung 10 in diesem Ausführungsbeispiel als eine Art Getriebeglocke ausgebildet. Mithin wird der Motor 2 an einem Gehäuse 8 des Getriebes und Differentials 13 abgestützt.

Der Kraftfluss verläuft in diesem Ausführungsbeispiel daher von dem Getriebegehäuse 13 über die Getriebeglocke 10 zu dem Motor 2 und von dort über die drehmomentübertragende Welle und das Getriebe und das Differential 13 zu den Raddynanometern 14a, 14b.

Die Piezoelemente 4a, 4b, 4c sind auch hier außerhalb des Leistungsflusses zwischen dem Motor 2 und der Getriebeglocke 10 angeordnet, um eine Reaktionskraft und/oder -drehmoment zu übertragen. Auch hier wird jeweils zwischen den entsprechenden Oberflächen des Motors 2 und der Getriebeglocke 10 und den Piezoelementen 4a, 4b, 4c ein Reibschluss gebildet.

Vorzugsweise kann in den in den Figuren 6 bis 8 gezeigten Ausführungsbeispielen für Messanordnungen 9 jede der in den Figuren 2 bis 5 gezeigten Anordnungen von Piezoelementen 4a, 4b, 4c, 4d der verschiedenen Ausführungsbeispiele eines Messsystems 1 eingesetzt werden.

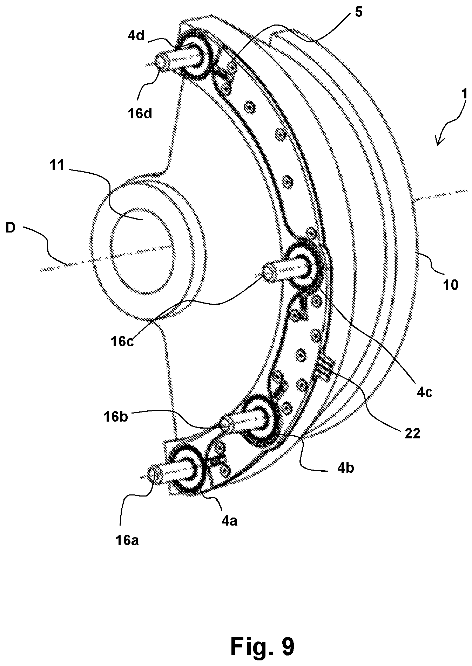

Beispielhaft wird in Fig. 9 der Einsatz eines Messsystems nach Fig. 5 in dem vierten Ausführungsbeispiel einer Messanordnung 9 nach Fig. 8 gezeigt. Das Messsystem 1 mit der Fixierungseinrichtung 5 und den Piezoelementen 4a, 4b, 4c, 4d ist in dieser Draufsicht an einer Getriebeglocke 10 angeordnet.

Vorzugsweise wird das Messsystem 1 hierbei von Befestigungsmitteln 16a, 16b, 16c, 16d an der Getriebeglocke 10 gestützt. Darüber hinaus dienen die Befestigungsmittel 16a, 16b, 16c, 16d dazu, eine Vorspannung zwischen dem Motor 2 (nicht gezeigt) und der Getriebeglocke 10 herzustellen, so dass die jeweiligen Stirnflächen der Piezoelemente 4a, 4b, 4c, 4d mit einer Oberfläche der Getriebeglocke 10 und einer Oberfläche des Motors 2 in Kontakt kommen, um eine reibschlüssige Verbindung zu bilden.

Durch den Reibschluss zwischen den Piezoelementen 4a, 4b, 4c, 4d und dem Motor 2 und der Abstützvorrichtung 10 können über die Stirnflächen der Piezoelemente 4a, 4b, 4c, 4d Scherkräfte auf die Piezoelemente eingeleitet werden, welche eine Ladungstrennung in den Piezoelementen 4a, 4b, 4c, 4d bewirken. Hierdurch liegen an den Ladungsableitungen bzw. elektrischen Leitungen 22 scherkraftabhängige Potentiale an.

Durch eine Öffnung 11 in der Getriebeglocke 10 kann sich eine Welle 3 (nicht dargestellt) durch die Getriebeglocke 10 hindurch in Richtung Getriebe und Differential 13 erstrecken.

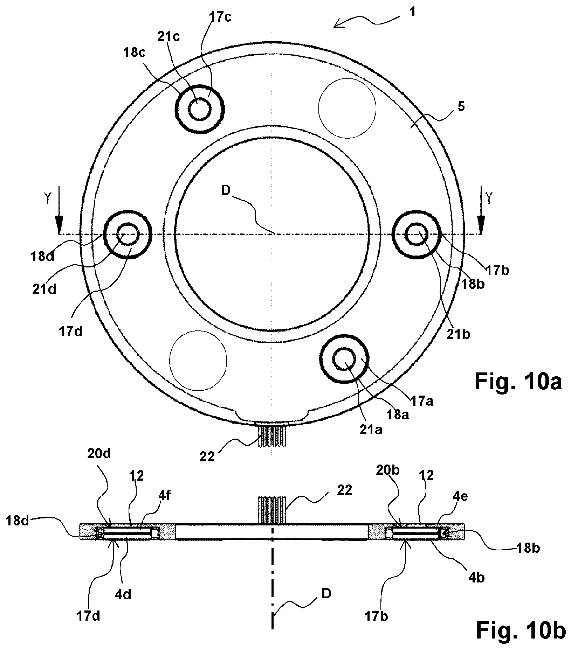

**Fig. 10a und 10b** zeigen ein fünftes Ausführungsbeispiel eines Messsystems 1, welches Piezoelement-Paare 18a, 18b, 18c, 18d aufweist, welche von einer Fixierungseinrichtung 5 gelagert werden.

**Fig. 10a** zeigt hierbei eine Draufsicht auf das Messsystem 1 und **Fig. 10b** eine Querschnittsansicht entlang einer Linie Y-Y. Die Piezoelement-Paare 18a, 18b, 18c, 18d werden jeweils von zwei Piezoelementen 4b, 4e; 4d, 4f gebildet, welche in Richtung der Drehachse D einer drehmomentübertragenden Welle 3 (nicht gezeigt), deren anliegende Kraft und/oder anliegendes Drehmoment bestimmt werden sollen, nebeneinander angeordnet sind.

Ein erstes Piezoelement 4b, 4d eines jeden Piezoelement-Paars 18a, 18b, 18c, 18d weist hierbei eine Vorzugsrichtung auf, welche parallel zu oder in einer einzigen Ebene liegt, welche von der Drehachse D der Welle 3 geschnitten wird, wobei die Ebene, wie in Fig. 10b dargestellt ist, vorzugsweise senkrecht zu der Drehachse D ausgerichtet ist. Mittels dieser ersten Sensoren 4b, 4d können vorzugsweise Kräfte und/oder ein Drehmoment bestimmt werden, welche in dieser Ebene wirken.

Die weiteren Piezoelemente 4e, 4f der Piezoelement-Paare 18a, 18b, 18c, 18d weisen vorzugsweise Vorzugsrichtungen auf, die nicht parallel zu der Ebene sind, und weiter vorzugsweise senkrecht zu dieser Ebene sind. Mit den weiteren Piezoelementen 4e, 4f lassen sich daher vorzugsweise Druck- oder Zugkräfte messen, welche im Wesentlichen senkrecht zu der Drehrichtung D gerichtet sind.

Wie in Fig. 10b dargestellt ist, weist jedes Piezoelement-Paar zwei Stirnflächen 17b, 20b; 17d, 20d auf, welche jeweils von einem der Piezoelemente 4b, 4e; 4d, 4f gebildet wird.

Die eine Stirnfläche 20b, 20d wird hierbei jeweils in der Fixierungseinrichtung 5 gelagert. Die andere Stirnfläche 17b, 17d kann mit einem Bauteil in Kontakt kommen, in Bezug auf welches eine Kraft gemessen werden soll. Sowohl die Stirnflächen 17b, 17d wie auch die zweiten Stirnflächen 20b, 20d bilden hierbei vorzugsweise eine kraftschlüssige, insbesondere reibschlüssige, Verbindung mit der Fixierungseinrichtung und dem anderen Bauteil aus.

Wie bereits erläutert, können hierfür Befestigungsmittel, insbesondere Spannschrauben, in die Bohrungen in den Piezoelementen durch Bohrungen 21a, 21b, 21c, 21d in den Piezoelement-Paaren 18a, 18b, 18c, 18d geführt werden, mittels welchen die Fixierungseinrichtung und das jeweils andere Bauteil und dadurch auch die Piezoelement-Paare 18a, 18b, 18c, 18d verspannt werden können. Vorzugsweise weist auch die Fixierungseinrichtung 5 Hohlräume 12 auf, um die Befestigungsmittel aufzunehmen.

Jedes der Piezoelemente 4a, 4b, 4c, 4d, 4e, 4f erzeugt ein Messsignal S1, S2, S3, S4, S5, S6 welches über Ladungsableitungen 22 abgenommen werden kann.

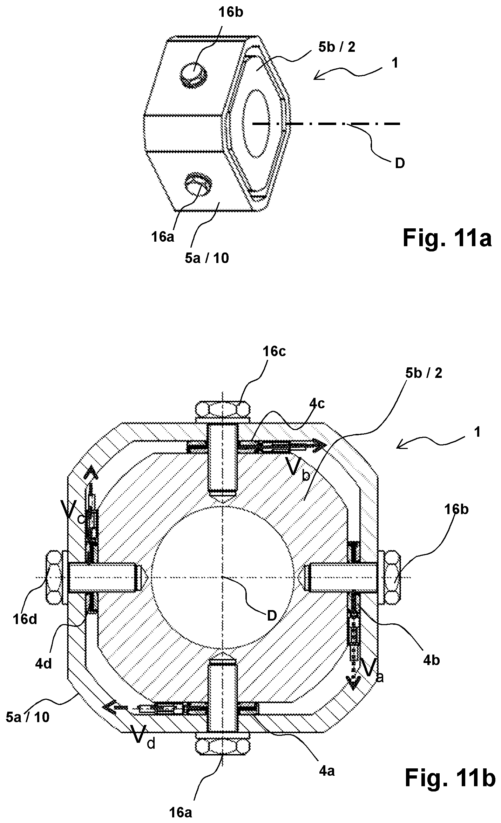

**Figuren 11a** und **11b** zeigen ein sechstes Ausführungsbeispiel eines erfindungsgemäßen Messsystems 1. Fig. 11a ist hierbei eine perspektivische Draufsicht und Fig. 11b eine Querschnittsansicht.

Das Messsystem 1 in diesem Ausführungsbeispiel zeichnet sich dadurch aus, dass die Piezoelemente 4a, 4b, 4c, 4d zwischen einem ersten Teil des Flansches 5a und einem zweiten Teil des Messflansches 5b angeordnet sind, wobei eine Vorspannung in radialer Richtung zu der Drehachse D aufgebracht wird. Dies steht im Gegensatz zu den Ausführungsbeispielen der Figuren 1 bis 5 und 10a/10b, wo die Vorspannung und mithin der Kraftschluss in Richtung der Drehachse D erzeugt wird.

Jedes der Piezoelemente 4a, 4b, 4c, 4d erzeugt ein Messsignal S1, S2, S3, S4, welches über Ladungsableitungen abgenommen werden kann.

Alternativ zu einem Messflansch 5a, 5b können die gezeigten Bauteile, welche jeweils in Verbindung mit den Piezoelementen 4a, 4b, 4c, 4d sind, auch eine Lagervorrichtung 2 und eine Abstützvorrichtung 10 einer Welle 3 (nicht gezeigt sein).

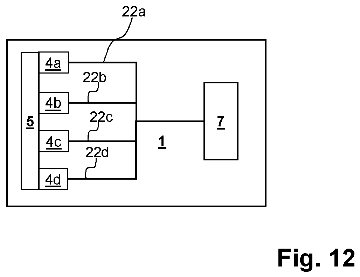

Wie in **Fig. 12** gezeigt wird, weist ein Messsystem 1 vorzugsweise eine Signalverarbeitungseinrichtung 7 auf, um Messsignale S1 des ersten Piezoelements 4a, S2 des zweiten Piezoelements 4b, S3 des dritten Piezoelements 4c und S4 des vierten Piezoelements 4d zu verarbeiten.

Um das Drehmoment Mz and der Welle sowie Querkräfte Fx, Fy berechnen zu können führt die Signalverarbeitungseinrichtung 7 vorzugsweise eine orthogonale Zerlegung der jeweiligen Vorzugsrichtung Vₐ, V_{b}, V_{c}, V_{d} der Piezoelemente 4a, 4b, 4c, 4d, der Messsignale S1, S2, S3, S4 und/oder der gemessenen Kräfte aus.

Hierbei sind die zu bestimmenden Parameter Mz, Fx, Fy die Lösung eines Gleichungssystems, wobei für jedes Messsignal eine Gleichung wie folgt gilt: $S 1 = {a}_{11} \cdot Mz + {a}_{12} \cdot Fx + {a}_{13} \cdot Fy$ $S 2 = {a}_{21} \cdot Mz + {a}_{22} \cdot Fx + {a}_{23} \cdot Fy$ $S 3 = {a}_{31} \cdot Mz + {a}_{32} \cdot Fx + {a}_{33} \cdot Fy$ S : l_{N1} • Mz ...

Jeder Koeffizient a hängt hierbei von mehreren Faktoren ab, wie beispielsweise der jeweiligen Position des Sensors und der Orientierung der Vorzugsrichtung Vₐ, V_{b}, V_{c}, V_{d} im Bezugssystem, einer Empfindlichkeit des jeweiligen Piezoelements 4a, 4b, 4c, 4d und einem möglichen Signalverlust durch einen Kraftnebenschluss über ein Befestigungsmittel.

Um ein solches Gleichungssystem für die Drehmomentkomponente Mz, eine erste Querkraftkomponente Fx und eine zweite Querkraftkomponente Fy aufzulösen, werden Messsignale von wenigstens drei Piezoelemente 4a, 4b, 4c, deren Vorzugsrichtungen Vₐ, V_{b}, V_{c} in der Weise ausgerichtet sind, dass sie in einer einzigen Ebene liegen, benötigt. Darüber hinaus dürfen wenigstens zwei der Vorzugsrichtungen Vₐ, V_{b}, V_{c} weder parallel noch antiparallel ausgerichtet sein.

Für diesen beschriebenen allgemeinen Fall mit N = 3, d. h. mit drei Piezoelementen 4a, 4b, 4c, ist die Lösung des oben dargestellten Gleichungssystems eindeutig. Werden weitere Piezoelemente zu dem Messsystem 1 hinzugefügt, so ist das Gleichungssystem mit drei zu bestimmenden Parametern Mz, Fx, Fy überbestimmt, die Messgenauigkeit kann jedoch nochmals verbessert werden.

Im Fall von N = 4 können vier verschiedene Gleichungssysteme F (S1, S2, S3), F (S1, S2, S4), F (S1, S3, S4), F (S2, S3, S4) aufgestellt werden. Die für die einzelnen zu bestimmenden Parameter Mz, Fx, Fy bestimmten Werte können dann addiert und gemittelt werden, d. h. in dem Fall von vier Piezoelementen 4a, 4b, 4c, 4d durch vier dividiert werden. In ähnlicher Weise kann ein überbestimmtes Gleichungssystem F (S1, S2 ..., SN) aufgestellt werden, welches mittels einer Minimierungsaufgabe gelöst wird.

Ist eine allgemeine Lösung für das Gleichungssystem gefunden, kann die Berechnung der zu bestimmenden Komponenten Fx, Fy, Mz auf eine Matrixmultiplikation reduziert werden. Diese hat drei Zeilen und so viele Spalten, wie Messsignale S1, S2, S3, ... SN zur Verfügung stehen. Die Matrixelemente bzw. Koeffizienten bilden die jeweiligen Beiträge der einzelnen Sensoren zu den zu bestimmenden Parametern Fx, Fy, Mz ab. $\left(\begin{matrix}Fx \\ Fy \\ Mz\end{matrix}\right) = K \left(\begin{matrix}c 11 & c 12 & c 13 & c 14 \\ c 21 & c 22 & c 23 & c 24 \\ c 31 & c 32 & c 33 & c 34\end{matrix}\right) \left(\begin{matrix}s 1 \\ s 2 \\ s 3 \\ s 4\end{matrix}\right)$

Für die Zerlegung der Messsignale S1, S2, S3, S4 in Komponenten, welche zu den jeweiligen zu bestimmenden Parametern Mz, Fx, Fy beitragen, ist es notwendig, dass die Lage der Piezoelemente 4a, 4b, 4c und die Orientierung der Vorzugsrichtungen Vₐ, V_{b}, V_{c}, V_{d} bekannt ist.

Die geometrischen Parameter können entweder aus einer Konstruktionszeichnung eines Messsystems 1 und aus der Kenntnis der Vorzugsrichtungen der Piezoelemente 4a, 4b, 4d bestimmt werden.

Die Orientierung der Vorzugsrichtungen Vₐ, V_{b}, V_{c}, V_{d} der Piezoelemente 4a, 4b, 4c, 4d kann jedoch auch durch Ausmessen der Vorzugsrichtungen Vₐ, V_{b}, V_{c}, V_{d} mittels einer Kalibrierungsmessung bestimmt werden. Vorzugsweise wird das Messsystem 1 hierfür zwischen zwei ebene Platten eingespannt. In einem nächsten Schritt werden externe Querkräfte mit bekannter Richtung aufgebracht. Aus der Größe der einzelnen Messsignale S1, S2, S3, S4 im Verhältnis zum Betrag und zu der Richtung der eingeleiteten Querkräfte kann die Vorzugsrichtung Vₐ, V_{b}, V_{c}, V_{d} der Piezoelemente 4a, 4b, 4c, 4d in der Ebene, welche durch die Vorzugsrichtung Vₐ, V_{b}, V_{c}, V_{d} der Piezoelemente 4a, 4b, 4c, 4d aufgespannt wird, bestimmt werden.

In ähnlicher Weise kann durch das Aufbringen eines definierten Drehmoments Mz und das Messen der einzelnen Messsignale S1, S2, S3, S4 ein Abstand rₐ, r_{b}, r_{c}, r_{d} der Piezoelemente 4a, 4b, 4c, 4d von einer Drehachse D bestimmt werden, wenn die Vorzugsrichtungen Vₐ, V_{b}, V_{c}, V_{d} der einzelnen Piezoelemente 4a, 4b, 4c, 4d bekannt sind.

Bei den beschriebenen Ausführungsbeispielen handelt es sich lediglich um Beispiele, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt. Insbesondere können einzelne Ausführungsbeispiele miteinander kombiniert werden.

**Bezugszeichenliste**

| | |
|---|---|
| Messsystem | 1 |
| Lagervorrichtung/Motor | 2 |
| Welle | 3 |
| Piezoelement | 4a, 4b, 4c, 4d, 4e, 4f |
| Fixierungseinrichtung | 5, 5a, 5b, 5c, 5d |
| Kupplung | 6a, 6b |
| Signalverarbeitungseinrichtung | 7 |
| Gehäuse | 8 |
| Messanordnung | 9 |
| Abstützvorrichtung | 10 |
| Öffnung | 11 |
| Hohlraum | 12 |
| Getriebe und Differential | 13 |
| Raddynamometer | 14a, 14b |
| Prüfstand | 15 |
| Befestigungsmittel | 16a, 16b, 16c, 16d |
| Erste Stirnfläche | 17a, 17b, 17c, 17d |
| Piezoelement-Paar | 18a, 18b |
| Winkelsektor | 19a, 19b, 19c |
| Zweite Stirnfläche | 20b, 20d |
| Bohrung | 21a, 21b, 21c, 21d |
| Ladungsableitung/elektrische Leitung | 22, 22a, 22b, 22c, 22d |
| Vorzugsrichtung | Vₐ, V_{b}, V_{c}, V_{d} |
| Messsignal | S1, S2, S3, S4 |
| Drehachse | D |

## Patentansprüche

1. Messsystem (1) zur Bestimmung einer Kraft und/oder eines Drehmoments an einer drehmomentübertragenden Welle (3), wobei das Messsystem (1) wenigstens drei, insbesondere wenigstens vier, Piezoelemente (4a, 4b, 4c, 4d) mit jeweils einer Vorzugsrichtung (Vₐ, V_{b}, V_{c}, V_{d}) aufweist, welche jeweils an unterschiedlichen Positionen um eine Drehachse (D) der Welle (3) in einem Kraftfluss, welcher über die Welle (3) übertragen wird, in der Weise angeordnet sind, dass eine Kraft des Kraftflusses, insbesondere ausschließlich, an den Piezoelementen (4a, 4b, 4c, 4d) anliegt, wobei die Vorzugsrichtungen jeweils parallel zu oder in einer einzigen Ebene liegen, welche von der Drehachse geschnitten wird, und wobei die Vorzugsrichtungen (Vₐ; V_{b}; V_{c}; V_{d}) von wenigstens Zweien, insbesondere wenigstens Dreien, der Piezoelemente (4a, 4b, 4c, 4d) zueinander weder parallel noch antiparallel ausgerichtet sind,
wobei das Messsystem (1) des Weiteren eine Signalverarbeitungseinrichtung (7) aufweist, eingerichtet, um die Kräfte und/oder Drehmomente mittels eines Gleichungssystems für Kraftkomponenten und Drehmomentkomponenten auf der Grundlage von Messsignalen (S1, S2, S3, S4) der einzelnen Piezoelemente (4a, 4b, 4c, 4d) zu bestimmen, um den Beitrag einzelner Piezoelemente (4a, 4b, 4c, 4d) zu verschiedenen Kraftkomponenten und Drehmomentkomponenten zu berücksichtigen.

2. Messsystem (1) nach Anspruch 1, wobei die Piezoelemente (4a, 4b, 4c, 4d) geometrisch in der Weise angeordnet sind, dass in Bezug auf ihre jeweilige Position zueinander in einer Projektion auf die Ebene keine Spiegelachse und/oder kein Spiegelpunkt existiert bzw. existieren.

3. Messsystem (1) nach Anspruch 1 oder 2, wobei die Piezoelemente (4a, 4b, 4c, 4d) geometrisch in der Weise angeordnet sind, dass wenigstens zwei Piezoelemente einen unterschiedlichen radialen Abstand von der Drehachse (D) aufweisen und/oder dass zwei Kreissektoren (α_{ab}, α_{bc}, α_{ca}) um die Drehachse (D) zwischen jeweils zwei Piezoelementen einen unterschiedlichen Winkel aufspannen.

4. Messsystem (1) nach einem der vorhergehenden Ansprüche, wobei die Signalverarbeitungseinrichtung des Weiteren eingerichtet ist, die Messsignale (S1, S2, S3, S4) in Komponenten, welche zu den jeweiligen zu bestimmenden Parametern beitragen, zu zerlegen.

5. Messsystem (1) nach einem der vorhergehenden Ansprüche, wobei Messsignale von allen Piezoelementen, deren Vorzugsrichtungen jeweils parallel zu oder in der Ebene liegen, zum Bestimmen der Kraft und/oder des Drehmoments herangezogen werden.

6. Messsystem (1) nach einem der vorhergehenden Ansprüche, wobei die Ebene wenigstens im Wesentlichen senkrecht zu einer Drehachse (D) der Welle (3) ausgerichtet ist.

7. Messsystem (1) nach einem der vorhergehenden Ansprüche, wobei eine Fläche (17a, 17b, 17c, 17d, 20b, 20d) der Piezoelemente, über welche die Kraft eingeleitet wird, wenigstens im Wesentlichen parallel zu der Ebene liegt.

8. Messsystem (1) nach einem der vorhergehenden Ansprüche, wobei die Piezoelemente (4a, 4b, 4c, 4d) einen Krafthauptschluss in Bezug auf den Kraftfluss bilden und wobei ein Kraftnebenschluss, insbesondere an Befestigungsmitteln, weniger als 10 %, bevorzugt weniger als 5 % und am bevorzugtesten weniger als 2 % der Kraft des Kraftflusses aufnimmt.

9. Messsystem (1) nach einem der vorhergehenden Ansprüche, wobei neben jedem Piezoelement (4a, 4b, 4c, 4d) in Richtung der Drehachse (D) der Welle (3) ein weiteres Piezoelement (4e, 4f) angeordnet ist, dessen Vorzugsrichtung (Vₑ, V_{f}, V_{g}, Vₕ) nicht parallel, insbesondere wenigstens im Wesentlichen senkrecht, zu der Ebene ausgerichtet ist, wobei die Piezoelemente (4a; 4b; 4c; 4d) mit dem jeweils daneben angeordneten weiteren Piezoelement (4e; 4f) Paare (18a, 18b, 18c, 18d) bilden, wobei die Kraft des Kraftflusses, insbesondere ausschließlich, an den Paaren (18a, 18b, 18c, 18d) anliegt.

10. Messsystem (1) nach einem der vorhergehenden Ansprüche, wobei die Piezoelemente um die Drehachse (D) ungleichmäßig verteilt sind.

11. Messsystem (1) nach einem der vorhergehenden Ansprüche, wobei die Welle (3) durch eine Lagervorrichtung (2), insbesondere eine Maschine, deren Aus- und/oder Eingangswelle durch die drehmomentübertragende Welle (3) gebildet ist, gelagert ist,
wobei eine oder die Fixierungseinrichtung (5) die Piezoelemente (4a, 4b, 4c, 4d) und/oder Paare (11a, 11b, 11c, 11d) trägt und in der Weise ausgebildet ist, dass mittels der Piezoelemente eine Kraft, insbesondere Scherkraft, zwischen der Lagervorrichtung (2) und einer Abstützvorrichtung (10) zum Abstützen der Lagervorrichtung (2) messbar ist.

12. Messsystem (1) nach einem der Ansprüche 12 bis 11, wobei die Fixierungseinrichtung (5) des Weiteren in der Weise ausgebildet ist, dass die Kraft parallel zu Stirnflächen (17a, 17b) der Piezoelemente (4a, 4b, 4c, 4d) und/oder Paare (11a, 11b, 11c, 11d) mittels einer kraftschlüssigen Verbindung einleitbar ist.

13. Messsystem (1) nach einem der vorhergehenden Ansprüche, eingerichtet, um sowohl tangential zur Drehrichtung der Welle wirkende Kräfte zu messen, welche zum Drehmoment beitragen, als auch Querkräfte, welche senkrecht zur Drehrichtung der Welle wirken, insbesondere in zwei orthogonalen Richtungen in der Ebene.

14. Messanordnung (9) zum Bestimmen einer Kraft und/oder eines Drehmoments an einer drehmomentübertragenden Welle (3), aufweisend ein auf dem Piezoeffekt beruhendes Messsystem (1) nach einem der Ansprüche 1 bis 13 und eine Welle (3), wobei die Piezoelemente (4a, 4b, 4c, 4d) zwischen einem ersten Teil der Welle (3) und einem zweiten Teil der Welle (3) in der Weise angeordnet sind, dass mittels der Piezoelemente (4a, 4b, 4c, 4d) eine Kraft, insbesondere Scherkraft, zwischen dem ersten Teil und dem zweiten Teil messbar ist.

15. Messanordnung (9) zur Bestimmung einer Kraft und/oder eines Drehmoments an einer drehmomentübertragenden Welle (3), aufweisend ein auf dem Piezoeffekt beruhendes Messsystem (1) nach einem der Ansprüche 1 bis 13,
eine Welle (3), eine Lagervorrichtung (2) und eine Abstützvorrichtung (10) der Lagervorrichtung (2), wobei die Lagervorrichtung (2) die Welle (3) lagert und wobei das Messsystem (1) eine rotierende Masse der Welle (3) und/oder eine rotierende Masse rotierender Teile einer Gesamtheit aus Welle (3) und Lagervorrichtung (2) nicht verändert.

16. Verfahren zur Bestimmung eines an einer Welle (3) anliegenden Drehmoments und/oder einer an einer Welle (3) anliegenden Kraft, mittels eines Messsystems (1) nach einem der Ansprüche 1 bis 13 mit wenigstens drei, insbesondere wenigstens vier, Piezoelementen (4a, 4b, 4c, 4d), welche jeweils eine Vorzugsrichtung (Vₐ, V_{b}, V_{c}, V_{d}) aufweisen und jeweils an unterschiedlichen Positionen um eine Drehachse (D) der Welle (3) in einem Kraftfluss, welcher über die Welle (3) übertragen wird, in der Weise angeordnet sind, dass eine Kraft des Kraftflusses, insbesondere ausschließlich, an den Piezoelementen (4a, 4b, 4c, 4d) anliegt, wobei Drehmomente und/oder Kräfte mittels des Gleichungssystems für Kraftkomponenten und Drehmomentkomponenten auf der Grundlage von Messsignalen der einzelnen Piezoelemente bestimmt werden, um den Beitrag einzelner Piezoelemente (4a, 4b, 4c, 4d) zu verschiedenen Kraftkomponenten und Drehmomentkomponenten zu berücksichtigen.

17. Verfahren zur Kalibrierung eines Messsystems (1) nach einem der Ansprüche 1 bis 13, die folgenden Arbeitsschritte aufweisend:
- Aufbringen einer definierten Kraft in einer ersten Richtung parallel zu der Ebene;
- Aufbringen einer definierten Kraft in einer zweiten Richtung parallel zu der Ebene;
- Erfassen wenigstens eines ersten Signals (S1) eines ersten Piezosensors (4a; 4e), eines zweiten Signals (S2) eines zweiten Piezosensors (4b; 4f) und eines dritten Signals (S3) eines dritten Piezosensors (4c) während des Aufbringens der definierten Kräfte; und
- Ableiten von Vorzugsrichtungen (Vₐ, V_{b}, V_{c}) der Piezoelemente (4a, 4b, 4c) auf der Grundlage der erfassen Signale (S1, S2, S3) und ersten und zweiten Richtungen der definierten Kräfte.

18. Verfahren zur Kalibrierung eines Messsystems (1) nach einem der Ansprüche 1 bis 13, die folgenden Arbeitsschritte aufweisend:
- Aufbringen eines definierten Drehmoments um die Drehachse der Welle (3);
- Erfassen wenigstens eines ersten Signals (S1) eines ersten Piezoelements (4a), eines zweiten Signals (S2) eines zweiten Piezoelements (4b) und eines dritten Signals (S3) eines dritten Piezoelements (4c); und
Ableiten von Abständen (rₐ, r_{b}, r_{c}) der Piezoelemente (4a, 4b, 4c) von der Drehachse (D) auf der Grundlage der erfassen Signale (S1, S2, S3) und des definierten Drehmoments aus der Größe der einzelnen Messsignale (S1, S2, S3) im Verhältnis zum Betrag des definierten Drehmoments und der Vorzugsrichtungen (Vₐ, V_{b}, V_{c}, V_{d}) der einzelnen Piezoelemente (4a, 4b, 4c, 4d).

## Claims

1. Measuring system (1) for determining a force and/or a torque on a torque-transmitting shaft (3), wherein the measuring system (1) comprises at least three, in particular at least four, piezo elements (4a, 4b, 4c, 4d), each having a preferred direction (Vₐ , V_{b} , V_{c} , V_{d} ) and each being arranged at different positions around an axis of rotation (D) of the shaft (3) within a force flow transmitted via the shaft (3), such that a force of the force flow acts, in particular, exclusively, on the piezo elements (4a, 4b, 4c, 4d), wherein the preferred directions are each parallel to or lie in a single plane intersected by the axis of rotation, and wherein the preferred directions (Vₐ ; V_{b} ; V_{c} ; V_{d} ) of at least two, in particular at least three, of the piezo elements (4a, 4b, 4c, 4d) are neither parallel nor antiparallel to one another, wherein the measuring system (1) further comprises a signal processing device (7) configured to determine the forces and/or torques by means of a system of equations for force components and torque components based on measurement signals (S1, S2, S3, S4) from the individual piezo elements (4a, 4b, 4c, 4d) in order to account for the contribution of individual piezo elements (4a, 4b, 4c, 4d) to various force components and torque components.

2. Measurement system (1) according to claim 1, wherein the piezo elements (4a, 4b, 4c, 4d) are geometrically arranged such that, with respect to their respective positions relative to one another in a projection onto the plane, there is no axis of symmetry and/or no point of symmetry.

3. Measuring system (1) according to claim 1 or 2, wherein the piezo elements (4a, 4b, 4c, 4d) are geometrically arranged such that at least two piezo elements have a different radial distance from the axis of rotation (D) and/or such that two circular sectors (α_{ab} , α_{bc} , α_{ca} ) span different angles around the axis of rotation (D) between any two piezo elements.

4. Measuring system (1) according to one of the preceding claims, wherein the signal processing device is further configured to decompose the measurement signals (S1, S2, S3, S4) into components that contribute to the respective parameters to be determined.

5. Measuring system (1) according to one of the preceding claims, wherein measurement signals from all piezo elements whose preferred directions are each parallel to or lie in the plane are used to determine the force and/or torque.

6. Measuring system (1) according to one of the preceding claims, wherein the plane is oriented at least substantially perpendicular to an axis of rotation (D) of the shaft (3).

7. Measuring system (1) according to any one of the preceding claims, wherein a surface (17a, 17b, 17c, 17d, 20b, 20d) of the piezo elements through which the force is applied lies at least substantially parallel to the plane.

8. Measuring system (1) according to one of the preceding claims, wherein the piezo elements (4a, 4b, 4c, 4d) form a main force path with respect to the force flow, and wherein a secondary force path-particularly at fasteners-absorbs less than 10%, preferably less than 5%, and most preferably less than 2% of the force of the force flow.

9. Measuring system (1) according to one of the preceding claims, wherein, adjacent to each piezo element (4a, 4b, 4c, 4d) in the direction of the axis of rotation (D) of the shaft (3), a further piezo element (4e, 4f) is arranged, whose preferred direction (Vₑ, V_{f}, V_{g}, Vₕ) is not parallel to, in particular is at least substantially perpendicular to, the plane, wherein the piezo elements (4a; 4b; 4c; 4d) form pairs (18a, 18b, 18c, 18d) with the respective additional piezo element (4e; 4f) arranged adjacent to them, wherein the force of the force flow acts, in particular exclusively, on the pairs (18a, 18b, 18c, 18d).

10. Measuring system (1) according to one of the preceding claims, wherein the piezo elements are distributed unevenly around the axis of rotation (D).

11. A measurement system (1) according to one of the preceding claims, wherein the shaft (3) is supported by a bearing device (2), in particular a machine, whose output and/or input shaft is formed by the torque-transmitting shaft (3),
wherein one or more of the fixing devices (5) carries the piezo elements (4a, 4b, 4c, 4d) and/or pairs (11a, 11b, 11c, 11d) and is designed such that, by means of the piezo elements, a force-in particular a shear force-between the bearing device (2) and a support device (10) for supporting the bearing device (2) can be measured.

12. Measuring system (1) according to any one of claims 12 through 11, wherein the fixing device (5) is further configured such that the force can be applied parallel to the end faces (17a, 17b) of the piezoelectric elements (4a, 4b, 4c, 4d) and/or pairs (11a, 11b, 11c, 11d) by means of a force-locking connection.

13. Measuring system (1) according to one of the preceding claims, configured to measure both forces acting tangentially to the direction of rotation of the shaft, which contribute to the torque, and transverse forces acting perpendicular to the direction of rotation of the shaft, in particular in two orthogonal directions within the plane.

14. Measuring assembly (9) for determining a force and/or a torque on a torque-transmitting shaft (3), comprising a measuring system (1) based on the piezoelectric effect according to any one of claims 1 through 13 and a shaft (3), wherein the piezo elements (4a, 4b, 4c, 4d) are arranged between a first portion of the shaft (3) and a second portion of the shaft (3) in such a way that a force, in particular a shear force, between the first portion and the second portion can be measured by means of the piezo elements (4a, 4b, 4c, 4d).

15. Measuring assembly (9) for determining a force and/or a torque on a torque-transmitting shaft (3), comprising a measuring system (1) based on the piezoelectric effect according to one of claims 1 through 13, a shaft (3), a bearing assembly (2), and a support device (10) for the bearing assembly (2), wherein the bearing device (2) supports the shaft (3) and wherein the measuring system (1) does not alter a rotating mass of the shaft (3) and/or a rotating mass of rotating parts of an assembly comprising the shaft (3) and the bearing device (2).

16. A method for determining a torque and/or a force acting on a shaft (3) using a measurement system (1) according to any one of claims 1 through 13, comprising at least three, in particular at least four, piezo elements (4a, 4b, 4c, 4d), each of which has a preferred direction (Vₐ, V_{b}, V_{c}, V_{d}) and are each arranged at different positions around an axis of rotation (D) of the shaft (3) within a force flow transmitted via the shaft (3), such that a force of the force flow acts-in particular, exclusively-on the piezo elements (4a, 4b, 4c, 4d), wherein torques and/or forces are determined using the system of equations for force components and torque components based on measurement signals from the individual piezo elements in order to account for the contribution of individual piezo elements (4a, 4b, 4c, 4d) to various force components and torque components.

17. A method for calibrating a measurement system (1) according to any one of claims 1 through 13, comprising the following steps:
- applying a defined force in a first direction parallel to the plane;
- applying a defined force in a second direction parallel to the plane;
- detecting at least a first signal (S1) from a first piezo sensor (4a; 4e), a second signal (S2) from a second piezo sensor (4b; 4f), and a third signal (S3) from a third piezo sensor (4c) while the defined forces are being applied; and
- deriving preferred directions (Vₐ, V_{b}, V_{c}) of the piezo elements (4a, 4b, 4c) based on the detected signals (S1, S2, S3) and the first and second directions of the defined forces.

18. A method for calibrating a measurement system (1) according to any one of claims 1 through 13, comprising the following steps:
- applying a defined torque about the axis of rotation of the shaft (3);
- detecting at least a first signal (S1) from a first piezoelectric element (4a), a second signal (S2) from a second piezoelectric element (4b), and a third signal (S3) from a third piezoelectric element (4c); and
calculating distances (rₐ, r_{b}, r_{c} ) of the piezo elements (4a, 4b, 4c) from the axis of rotation (D) based on the detected signals (S1, S2, S3) and the defined torque, using the magnitude of the individual measurement signals (S1, S2, S3) in relation to the magnitude of the defined torque and the preferred directions (Vₐ , V_{b} , V_{c} , V_{d}) of the individual piezo elements (4a, 4b, 4c, 4d).

## Revendications

1. Système de mesure (1) pour la détermination d'une force et/ou d'un couple de rotation sur un arbre (3) de transmission de couple de rotation, dans lequel le système de mesure (1) présente au moins trois, en particulier au moins quatre, éléments piézoélectriques (4a, 4b, 4c, 4d) avec respectivement une direction préférentielle (Vₐ, V_{b}, V_{c}, V_{d} ) qui sont disposés respectivement sur différentes positions autour d'un axe de rotation (D) de l'arbre (3) dans un flux de force, qui est transmis par l'intermédiaire de l'arbre (3), de telle manière qu'une force du flux de force est appliquée, en particulier exclusivement, sur les éléments piézoélectriques (4a, 4b, 4c, 4d), dans lequel les directions préférentielles sont respectivement parallèles à ou dans un seul plan qui est coupé par l'axe de rotation, et dans lequel les directions préférentielles (Vₐ ; V_{b} ; V_{c} ; V_{d} ) d'au moins deux, en particulier d'au moins trois, des éléments piézoélectriques (4a, 4b, 4c, 4d) présentent les uns par rapport aux autres ni une orientation parallèle ni une orientation antiparallèle, dans lequel le système de mesure (1) présente par ailleurs un équipement de traitement de signaux (7), mis au point pour déterminer les forces et/ou couples de rotation au moyen d'un système d'équation pour des composantes de force et des composantes de couple de rotation sur la base de signaux de mesure ( S1, S2, S3, S4) des divers éléments piézoélectriques (4a, 4b, 4c, 4d) pour tenir compte de la contribution des divers éléments piézoélectriques (4a, 4b, 4c, 4d) aux différentes composantes de force et composantes de couple de rotation.

2. Système de mesure (1) selon la revendication 1, dans lequel les éléments piézoélectriques (4a, 4b, 4c, 4d) sont disposés géométriquement de telle manière qu'aucun axe miroir et/ou aucun point miroir n'existe(nt) par rapport à leur position respective les uns par rapport aux autres dans une projection sur le plan.

3. Système de mesure (1) selon la revendication 1 ou 2, dans lequel les éléments piézoélectriques (4a, 4b, 4c, 4d) sont disposés géométriquement de telle manière qu'au moins deux éléments piézoélectriques présentent une distance radiale différente de l'axe de rotation (D) et/ou que deux secteurs circulaires (α_{ab}, α_{bc}, α_{ca}) autour de l'axe de rotation (D) forment un angle différent entre respectivement deux éléments piézoélectriques.

4. Système de mesure (1) selon l'une quelconque des revendications précédentes, dans lequel l'équipement de traitement de signaux est par ailleurs mis au point pour décomposer les signaux de mesure (S1, S2, S3, S4) en composantes contribuant aux paramètres respectifs à déterminer.

5. Système de mesure (1) selon l'une quelconque des revendications précédentes, dans lequel des signaux de mesure provenant de tous les éléments piézoélectriques, dont les directions préférentielles sont respectivement parallèles au plan ou dans le plan, sont utilisés pour déterminer la force et/ou le couple de rotation.

6. Système de mesure (1) selon l'une quelconque des revendications précédentes, dans lequel le plan est orienté au moins sensiblement perpendiculairement à un axe de rotation (D) de l'arbre (3).

7. Système de mesure (1) selon l'une quelconque des revendications précédentes, dans lequel une surface (17a, 17b, 17c, 17d, 20b, 20d) des éléments piézoélectriques, par l'intermédiaire desquels la force est introduite, est au moins sensiblement parallèle au plan.

8. Système de mesure (1) selon l'une quelconque des revendications précédentes, dans lequel les éléments piézoélectriques (4a, 4b, 4c, 4d) forment une liaison de force principale par rapport au flux de force et dans lequel une liaison de force secondaire, en particulier sur des moyens de fixation, absorbe moins de 10 %, de manière préférée moins de 5 % et idéalement moins de 2 % de la force du flux de force.

9. Système de mesure (1) selon l'une quelconque des revendications précédentes, dans lequel est disposé, à côté de chaque élément piézoélectrique (4a, 4b, 4c, 4d), en direction de l'axe de rotation (D) de l'arbre (3), un autre élément piézoélectrique (4e, 4f), dont la direction préférentielle (Vₑ, V_{f}, V_{g}, Vₕ ) n'est pas parallèle, en particulier est au moins sensiblement perpendiculaire, au plan, dans lequel les éléments piézoélectriques (4a ; 4b ; 4c ; 4d) forment avec l'autre élément piézoélectrique (4e ; 4f) disposé respectivement à côté des paires (18a, 18b, 18c, 18d), dans lequel la force du flux de force est appliquée, en particulier exclusivement, sur les paires (18a, 18b, 18c, 18d).

10. Système de mesure (1) selon l'une quelconque des revendications précédentes, dans lequel les éléments piézoélectriques sont répartis de manière inégale autour de l'axe de rotation (D).

11. Système de mesure (1) selon l'une quelconque des revendications précédentes, dans lequel l'arbre (3) est supporté par un dispositif de palier (2), en particulier une machine dont l'arbre de sortie et/ou d'entrée est formé par l'arbre (3) de transmission de couple de rotation,
dans lequel un ou l'équipement de fixation (5) porte les éléments piézoélectriques (4a, 4b, 4c, 4d) et/ou les paires (11a, 11b, 11c, 11d) et est réalisé de telle manière qu'une force, en particulier une force de cisaillement, peut être mesurée entre le dispositif de palier (2) et un dispositif d'appui (10) pour soutenir le dispositif de palier (2) au moyen des éléments piézoélectriques.

12. Système de mesure (1) selon l'une quelconque des revendications 12 à 11, dans lequel l'équipement de fixation (5) est par ailleurs réalisé de telle manière que la force peut être introduite parallèlement à des surfaces frontales (17a, 17b) des éléments piézoélectriques (4a, 4b, 4c, 4d) et/ou des paires (11a, 11b, 11c, 11d) au moyen d'une liaison à force.

13. Système de mesure (1) selon l'une quelconque des revendications précédentes, mis au point pour mesurer à la fois des forces agissant tangentiellement à la direction de rotation de l'arbre, qui contribuent au couple de rotation, et des forces transversales, qui agissent perpendiculairement à la direction de rotation de l'arbre, en particulier dans deux directions orthogonales dans le plan.

14. Ensemble de mesure (9) pour déterminer une force et/ou un couple de rotation sur un arbre (3) de transmission de couple de rotation, présentant un système de mesure (1) basé sur l'effet piézoélectrique selon l'une quelconque des revendications 1 à 13 et un arbre (3), dans lequel les éléments piézoélectriques (4a, 4b, 4c, 4d) sont disposés entre une première partie de l'arbre (3) et une deuxième partie de l'arbre (3) de telle manière qu'une force, en particulier une force de cisaillement, peut être mesurée entre la première partie et la deuxième partie au moyen des éléments piézoélectriques (4a, 4b, 4c, 4d).

15. Ensemble de mesure (9) pour déterminer une force et/ou un couple de rotation sur un arbre (3) de transmission de couple de rotation, présentant un système de mesure (1) basé sur l'effet piézoélectrique selon l'une quelconque des revendications 1 à 13, un arbre (3), un dispositif de palier (2) et un dispositif d'appui (10) du dispositif de palier (2), dans lequel le dispositif de palier (2) supporte l'arbre (3) et dans lequel le système de mesure (1) ne modifie pas une masse tournante de l'arbre (3) et/ou une masse tournante de parties en rotation d'un ensemble composé de l'arbre (3) et du dispositif de palier (2).

16. Procédé de détermination d'un couple de rotation appliqué sur un arbre (3) et/ou d'une force appliquée sur un arbre (3), au moyen d'un système de mesure (1) selon l'une quelconque des revendications 1 à 13 avec au moins trois, en particulier au moins quatre, éléments piézoélectriques (4a, 4b, 4c, 4d), qui présentent respectivement une direction préférentielle (Vₐ, V_{b}, V_{c}, V_{d} ) et sont disposés respectivement sur différentes positions autour d'un axe de rotation (D) de l'arbre (3) dans un flux de force, qui est transmis par l'intermédiaire de l'arbre (3), de telle manière qu'une force du flux de force, est appliquée, en particulier exclusivement, sur les éléments piézoélectriques (4a, 4b, 4c, 4d), dans lequel des couples de rotation et/ou des forces sont déterminés au moyen du système d'équation pour des composantes de force et des composantes de couple de rotation sur la base de signaux de mesure des divers éléments piézoélectriques pour déterminer la contribution des divers éléments piézoélectriques (4a, 4b, 4c, 4d) aux différentes composantes de force et composantes de couple de rotation.

17. Procédé d'étalonnage d'un système de mesure (1) selon l'une quelconque des revendications 1 à 13, présentant les étapes de travail suivantes :
- l'application d'une force définie dans une première direction parallèlement au plan ;
- l'application d'une force définie dans une deuxième direction parallèlement au plan ;
- la détection d'au moins un premier signal (S1) d'un premier capteur piézoélectrique (4a ; 4e), d'un deuxième signal (S2) d'un deuxième capteur piézoélectrique (4b ; 4f) et d'un troisième signal (S3) d'un troisième capteur piézoélectrique (4c) pendant l'application des forces définies ; et
- la déduction de directions préférentielles (Vₐ, V_{b}, V_{c} ) des éléments piézoélectriques (4a, 4b, 4c) sur la base des signaux détectés (S1, S2, S3) et des première et deuxième directions des forces définies.

18. Procédé d'étalonnage d'un système de mesure (1) selon l'une quelconque des revendications 1 à 13, présentant les étapes de travail suivantes :
- l'application d'un couple de rotation défini autour de l'axe de rotation de l'arbre (3) ;
- la détection d'au moins un premier signal (S1) d'un premier élément piézoélectrique (4a), d'un deuxième signal (S2) d'un deuxième élément piézoélectrique (4b) et d'un troisième signal (S3) d'un troisième élément piézoélectrique (4c) ; et
la déduction des distances (rₐ, r_{b}, r_{c} ) des éléments piézoélectriques (4a, 4b), 4c) par rapport à l'axe de rotation (D) sur la base des signaux détectés (S1, S2, S3) et du couple de rotation défini à partir de la taille des divers signaux de mesure (S1, S2), S3) par rapport à la valeur du couple de rotation défini et des directions préférentielles (Vₐ, V_{b}, V_{c}, V_{d} ) des divers éléments piézoélectriques (4a, 4b, 4c, 4d).
